# EUROPÄISCHE PATENTSCHRIFT

(11) **EP 3 601 867 B1**
(45) Veröffentlichungstag und Bekanntmachung des Hinweises auf die Patenterteilung: **11.09.2024**
(21) Anmeldenummer: 18714492.8
(22) Anmeldetag: 28.03.2018
(51) Int. Cl.: F16L 37/56, F16L 37/098, F16L 37/091, F16L 5/02, F16L 5/12, F16L 5/14

(54) **ANSCHLUSSVORRICHTUNG FÜR MEDIENLEITUNGEN**
CONNECTING DEVICE FOR MEDIA LINES
DISPOSITIF DE RACCORDEMENT POUR CONDUITES DE FLUIDE

(30) Priorität: 28.03.2017 DE 102017106676; 08.12.2017 DE 202017107491 U
(43) Veröffentlichungstag der Anmeldung: 05.02.2020
(73) Patentinhaber: Voss Automotive GmbH, 51688 Wipperfürth (DE)
(72) Erfinder: HAGEN, Harald, 51688 Wipperfürth (DE); HASBERG, Markus, 51688 Wipperfürth (DE); ROSOWSKI, Evelin, 51688 Wipperfürth (DE)
(74) Vertreter: Dr. Solf & Zapf Patent- und Rechtsanwalts PartG mbB
(86) Internationale Anmeldenummer: PCT/EP2018/057950
(87) Internationale Veröffentlichungsnummer: WO 2018/178166

(56) Entgegenhaltungen:
- EP-A1- 0 999 398
- EP-A1- 2 733 403
- DE-A1- 102012 108 791
- DE-A1- 102015 110 124
- DE-A1- 102016 106 250
- DE-U1- 202005 001 153
- DE-U1- 202005 020 263
- DE-U1- 8 908 944

## Beschreibung

Die Erfindung betrifft eine Anschlussvorrichtung für Medienleitungen, insbesondere eine Mehrzahl von Medienleitungen. Anschlussvorrichtungen für Medienleitungen sind im Stand der Technik in einer Vielzahl von Ausgestaltungen bekannt. Bei derartigen Anschlussvorrichtungen dienen die Anschlussöffnungen dem Verbinden des Fluidkanals der Anschlussvorrichtung mit einer Medienleitung. Beispielsweise werden in derartige Anschlussöffnungen eines Kupplungselements sogenannte Einpresspatronen eingesetzt, die innerhalb der Anschlussöffnung fest mit dem Kupplungselement verbunden werden und eine Verbindungsschnittstelle für eine Medienleitung bereitstellen.

Unter der Bezeichnung "Medienleitung" sind grundsätzlich Leitungsverbindungen für beliebige Strömungs- und/oder Druckmedien, wie Gase oder Flüssigkeiten, zu verstehen. Medienleitungen sind grundsätzlich Rohr- oder Schlauchleitungen sowie deren Anschluss- und Verbindungselemente, die Teil eines Systems zur Führung eines Mediums sind. Insbesondere sind derartige Medienleitungen aus Kunststoff hergestellt.

EP 2 733 403 A1 offenbart eine Kupplungseinrichtung für Medienleitungen. Die Kupplungseinrichtung weist zwei plattenartige, miteinander verbindbare Kupplungsträger auf. Die Kupplungsträger weisen jeweils Aufnahmeöffnungen zur fixierten Halterung von eingesetzten Steckerteilen und Muffenteilen auf. In die Kupplungsträger sind Halteeinsätze einsetzbar, die in den Kupplungsträgern gegen Lösen fixiert sind.

DE 89 08 944 U1 offenbart eine Rohrleitungsmehrfachkupplung mit zwei oder mehr Durchgangsbohrungen. Die Mehrfachkupplung weist zwei Grundplatten auf, die beispielsweise mit einer Schraubverbindung verbindbar sind. Vor dem Zusammenfügen der Grundplatten kann mit jeder Grundplatte ein Kupplungsteil verrastet werden, indem ein Rastarm der Grundplatte in eine umlaufende Nut am Kupplungsteil eingreift.

DE 20 2005 001 153 U1 offenbart eine Kupplungseinrichtung für Medienleitungen. Die Kupplungseinrichtung umfasst zwei plattenartige, miteinander verbindbare Kupplungsteile. Jedes dieser Kupplungsteile weist Aufnahmeöffnungen zum Einstecken und zur fixierten Halterung von Steckkupplungsteilen auf.

DE 20 2005 020 263 A1 offenbart eine Mehrfachkupplung für Medienleitungen. Die Mehrfachkupplung umfasst zwei plattenartige Kupplungsträger, die jeweils mehrere Aufnahmen zum Einsetzen und zur fixierten Halterung von Steckkupplungsteilen aufweisen.

DE 10 2015 110 124 A1 offenbart eine Anschlussvorrichtung zum lösbaren Anschluss von Kunststoff-Rohrleitungen. Eine Überwurfschraube wird zusammen mit einem Einpressadapter in einer Aufnahmeeinrichtung verschraubt.

DE 10 2012 108 791 A1 offenbart ein Bausystem für eine Anschlussvorrichtung für Medienleitungen. Ein Anschlusskörper weist eine Anschlussöffnung zur Aufnahme eines Innenteils auf.

Anschlussvorrichtungen für Medienleitungen sind üblicherweise für den jeweiligen Einsatzfall vorkonfiguriert und weisen an dem Kupplungselement vordefinierte Schnittstellen für Medienleitungen auf.

Sobald eine Anschlussvorrichtung also für einen bestimmten Einsatzzweck konfiguriert ist, lassen sich folglich keine Anpassungen mehr vornehmen. Ferner muss für jede Konfiguration eine Vielzahl von speziellen Einzelkomponenten vorgehalten werden, was den Aufwand für Lagerhaltung und Logistik steigert.

Der vorliegenden Erfindung liegt daher die Aufgabe zu Grunde, eine Anschlussvorrichtung anzugeben, die eine gesteigerte Flexibilität bezüglich der Anpassung an unterschiedliche Einsatzanforderungen sowie eine einfache Montage gewährleistet.

Die vorgenannte Aufgabe ist mit einer Anschlussvorrichtung gemäß Anspruch 1 gelöst.

Bei der Anschlussvorrichtung für eine Mehrzahl an Medienleitungen handelt es sich insbesondere um eine Trennstelle, an der eine Medienleitung auftrennbar ist. Das in die Anschlussöffnung einbringbare bzw. eingebrachte Einsatzteil ist lösbar in der Anschlussöffnung gehalten.

Dass das Einsatzteil "lösbar" in die Anschlussöffnung eingebracht ist, bedeutet, dass keine Befestigung des Einsatzteils innerhalb der Anschlussöffnung erfolgt und das Einsatzteil lediglich mit den wirkenden Dicht- und Anlagekräften in der Anschlussöffnung anliegt. Das Einsatzteil ist zerstörungsfrei aus der Anschlussöffnung entnehmbar, insbesondere vollständig zerstörungsfrei von dem Kupplungselement entfernbar.

Das Einsatzteil weist eine Verbindungsschnittstelle zum Herstellen einer Verbindung mit einer Medienleitung auf, wobei der Verbindungsbereich beispielsweise als Steckeraufnahme für einen Anschlussstecker oder als Verbindungsvorrichtung für eine Schlauch- oder Rohrleitung ausgebildet ist. Die Verbindungsschnittstelle des Einsatzteils dient dem Verbinden des Einsatzteils und damit auch dem mit dem Verbindungsbereich des Einsatzteils in Verbindung stehenden Fluidkanal mit einer Medienleitung. Die Verbindungsschnittstelle weist insbesondere Mittel zum dichtenden Verbinden mit einer Rohr- oder Schlauchleitung auf.

Die Anschlussöffnung ist im Wesentlichen kreiszylindrisch, insbesondere mit mindestens zwei unterschiedlichen Innendurchmessern ausgebildet. Beispielsweise ist die Anschlussöffnung als kreiszylindrische Ausnehmung mit konstantem Durchmesser ausgebildet. Die Innenwandungen der Anschlussöffnung sind in Längsrichtung insbesondere parallel zueinander ausgebildet. Vorzugsweise weist die Anschlussöffnung ausgehend von einem Zugang zur Anschlussöffnung - dem ersten Endbereich der Anschlussöffnung - zunächst einen Abschnitt mit einem ersten Durchmesser und einer ersten Tiefe auf, insbesondere wobei die erste Tiefe der Hälfte der Gesamttiefe entspricht. In Längsrichtung der Anschlussöffnung folgt daraufhin ein zweiter Abschnitt mit einem geringeren Durchmesser, so dass zwischen dem ersten Abschnitt und dem zweiten Abschnitt ein umlaufender Absatz - eine erste Anschlagfläche - ausgebildet ist. Gegenüberliegend zum Zugang zur Anschlussöffnung, also im zweiten Endbereich der Anschlussöffnung, wird die Anschlussöffnung beispielsweise durch einen Boden begrenzt, der insbesondere in den Fluidkanal mündet.

Die Anschlussöffnung steht mit dem Fluidkanal der Anschlussvorrichtung in Verbindung, so dass eine an den Verbindungsbereich angeschlossene Medienleitung automatisch mit dem Fluidkanal oder mit den Fluidkanälen der Anschlussvorrichtung in Verbindung steht.

Das Einsatzteil weist mindestens ein Verbindungsmittel zum Verbinden mit der Deckplatte auf. Das Verbindungsmittel ist zur formschlüssigen Verrastung mit der Deckplatte ausgebildet. Dadurch, dass die Deckplatte mit der Grundplatte verbindbar bzw. verbunden ist, wird das Einsatzelement durch die Deckplatte in der Anschlussöffnung gehalten. Vorzugsweise ist die Deckplatte mit der Grundlatte verschraubt und/oder formschlüssig verbunden, insbesondere verrastet. Das Verbindungsmittel des Einsatzteils ist als mindestens zwei Rasthaken ausgebildet. Dabei muss das Rastmittel selbst nicht radial-federelastisch sein; es genügt, wenn das Rastmittel zusammen mit dem Einsatzteil, insbesondere dem Einsatzteilgrundkörper, radial-federelastisch ist, also zusammen mit zumindest einem Teil des Einsatzteils radial ausweicht.

Vorzugsweise weist die Anschlussvorrichtung für Medienleitungen mindestens zwei, bevorzugt vier, besonders bevorzugt sechs separate Anschlussöffnungen auf, wobei in jede Anschlussöffnung jeweils ein Einsatzteil eingebracht ist. Insbesondere weist die Deckplatte ebenfalls eine der Anzahl an Anschlussöffnungen entsprechende Anzahl an Ausnehmungen auf, so dass in jede Ausnehmung in der Deckplatte ein Einsatzteil eingebracht und mit der Deckplatte über das Verbindungsmittel verbunden ist.

Die Anschlussöffnung erstreckt sich zumindest teilweise in der Grundplatte, d. h. die Anschlussöffnung ist entweder in der Grundplatte angeordnet oder sie ist zumindest so angeordnet, dass sie sich zumindest teilweise durch die Grundplatte hindurch oder zumindest in die Grundplatte hinein erstreckt. Die Anschlussöffnung muss dazu nicht unmittelbar durch die Grundplatte verlaufen, sondern kann sich auch mittelbar, d. h. in einem anderen Bauteil, durch die Grundplatte erstrecken.

Die Anschlussöffnung weist auf ihrem Innenumfang an der ersten Endseite eine Mehrzahl in Längsrichtung verlaufender Leckageausnehmungen auf.

Der Vorteil der vorliegenden Erfindung gegenüber dem Stand der Technik ist, dass in die Anschlussöffnung bzw. in die Anschlussöffnungen je nach Einsatzfall unterschiedliche Einsatzteile lösbar eingesetzt werden können, um den Fluidkanal bzw. die Fluidkanäle mit der Medienleitung zu verbinden. Das Einsatzteil ist auf einfache Weise von der Deckplatte in der Anschlussöffnung gehalten, so dass das Einsatzteil nach Entfernen der Deckplatte aus der Anschlussöffnung entfernt und ausgetauscht werden kann. Dabei ist von Vorteil, dass die Einsatzteile mit unterschiedlichen Verbindungsbereichen je nach Einsatzzweck ausgewählt werden können, wodurch das Kupplungselement an jeder Anschlussöffnung mit unterschiedlichen, zerstörungsfrei lösbaren Einsatzteilen ausgestattet werden kann, so dass das Kupplungselement sehr flexibel und modular konfigurierbar ist. Solange die Deckplatte mit der Grundplatte verbunden ist, kann das Einsatzteil nicht aus der Anschlussöffnung entfernt werden.

Gemäß einer ersten Ausgestaltung der Anschlussvorrichtung hat sich als besonders vorteilhaft herausgestellt, wenn die Anschlussöffnung in der Grundplatte, insbesondere unmittelbar in der Grundplatte, ausgebildet ist. Bevorzugt weist die Grundplatte mindestens einen die Anschlussöffnung zumindest teilweise umgebenden, hülsenartigen Abschnitt auf.

Die Grundplatte wird folglich durch eine Platte gebildet, in der die Anschlussöffnung unmittelbar ausgebildet ist, so dass das Einsatzteil in die Grundplatte eingesetzt und von der Deckplatte in ihrer Position gehalten wird. Vorzugsweise weist die Grundplatte mindestens sechs Anschlussöffnungen auf. An jeder Anschlussöffnung ist vorzugsweise ein die Anschlussöffnung zumindest teilweise umgebender, hülsenartiger Abschnitt vorgesehen, der insbesondere kreisrund ausgebildet ist.

Alternativ dazu hat sich zudem als vorteilhaft herausgestellt, wenn gemäß einer weiteren Ausgestaltung vorgesehen ist, dass die Grundplatte mindestens eine Kupplungsausnehmung aufweist, dass in die Kupplungsausnehmung ein Kupplungselement einsetzbar bzw. eingesetzt ist und mit der Grundplatte verbindbar bzw. verbunden ist, und dass die Anschlussöffnung in dem Kupplungselement ausgebildet ist, insbesondere dass das Kupplungselement einen die Anschlussöffnung zumindest teilweise umgebenden, hülsenartigen Abschnitt ausbildet.

Die Anschlussöffnung bzw. die Anschlussöffnungen, die sich durch die Grundplatte erstrecken, sind bei diesem Ausführungsbeispiel in einem weiteren Bauteil, nämlich in dem Kupplungselement ausgebildet, das mit der Grundplatte, insbesondere formschlüssig, verbunden ist. Das Kupplungselement steht vorzugsweise auf einer Seite der Grundplatte hervor, wodurch ein hülsenartiger Abschnitt ausgebildet wird, der die Anschlussöffnung zumindest teilweise umgibt. Die Grundplatte ist bei diesem Ausführungsbeispiel als einfache Platte mit einer oder einer Mehrzahl, insbesondere sechs, Kupplungsausnehmungen ausgebildet, wobei die Kupplungsausnehmungen vorzugsweise rotationssymmetrische Durchbrüche durch die Grundplatte sind.

Gemäß einem weiteren Ausführungsbeispiel der Anschlussvorrichtung ist vorgesehen, dass die Grundplatte in der Kupplungsausnehmung mindestens ein radial flexibles Rastelement, insbesondere zwei gegenüberliegend angeordnete, radial flexible Rastelemente, aufweist, und dass mit dem Rastelement bzw. den Rastelementen eine formschlüssige Verbindung mit dem Kupplungselement herstellbar ist. Das Rastelement bzw. die Rastelemente können radial flexibel ausweichen, d. h. temporär den Durchmesser der Kupplungsausnehmung vergrößern. Das Kupplungselement wird folglich derart mit der Grundplatte verbunden, dass es von der Unterseite der Grundplatte durch die Kupplungsausnehmung hindurchgeführt wird, wodurch das flexible Rastelement bzw. die flexiblen Rastelemente temporär den Durchmesser vergrößern und in einer bestimmten Rastposition mit dem Kupplungselement, insbesondere einem an dem Kupplungselement, bevorzugt an einem Außenumfang des Kupplungselementes, angeordneten Gegenrastmittel, formschlüssig verrasten.

Eine weitere Ausgestaltung der Anschlussvorrichtung sieht vor, dass die Grundplatte an der Kupplungsausnehmung mindestens ein flexibles Kupplungsrastmittel aufweist, insbesondere mindestens zwei flexible Kupplungsrastmittel aufweist, bevorzugt dass jedes Kupplungsrastmittel mindestens eine tangential zur Kupplungsausnehmung angeordnete Rastkante aufweist. Das Kupplungsrastmittel ist vorzugsweise derart relativ zur Kupplungsausnehmung angeordnet, dass die durch die Flexibilität realisierbare Ausweichbewegung in einer Richtung erfolgt, die nicht auf die Mittelachse der Kupplungsausnehmung gerichtet ist, insbesondere in Sekantenrichtung oder Tangentenrichtung. Vorzugsweise sind zwei Kupplungsrastmittel vorgesehen, die insbesondere versetzt zueinander angeordnet sind, so dass die Ausweichbewegung in zwei zueinander parallelen, gedachten Ebenen erfolgt. Die Kupplungsrastmittel sind beispielweise mit an dem Kupplungselement vorgesehenen Rastvorsprüngen verrastbar, insbesondere die Rastkanten.

Zudem ist gemäß einem weiteren Ausführungsbeispiel vorgesehen, dass die Grundplatte an der Kupplungsausnehmung bzw. an den Kupplungsausnehmungen ein flexibles Sperrmittel aufweist. Das Sperrmittel ist vorzugsweise als flexibler Rastarm ausgebildet, der in radialer Richtung auf die Mittelachse der Kupplungsausnehmung bewegbar ist. Im Montagezustand wirkt das Sperrmittel beispielweise formschlüssig mit einer Rastkante am Kupplungselement zusammen.

Des Weiteren hat sich gemäß einer weiteren Ausgestaltung als vorteilhaft herausgestellt, wenn vorgesehen ist, dass die Deckplatte mindestens ein Deckplattenrastmittel, vorzugsweise eine Mehrzahl an Deckplattenrastmitteln, besonders bevorzugt zwei Deckplattenrastmittel, zum, beispielsweise formschlüssigen, Verbinden der Deckplatte mit der Grundplatte und/oder zum Verbinden der Anschlussvorrichtung in einer Einbausituation, beispielsweise in einer Ausnehmung in einer Wandung, aufweist. Beispielsweise sind die Deckplattenrastmittel als flexible Rastarme, z. B. zwei flexible Rastarme, an der Deckplatte ausgebildet und können formschlüssig mit entsprechenden Rastkanten oder Rastausnehmungen an der Grundplatte derart zusammenwirken, dass die Deckplatte und die Grundplatte mechanisch verbunden sind. Dies ist beispielsweise vorteilhaft, um eine vorläufige Verbindung zwischen Deckplatte und Grundplatte zu Montagezwecken zu erreichen. Vorzugsweise werden die Deckplatte und die Grundplatte zur endgültigen Fixierung miteinander verschraubt. Zudem ist vorgesehen, dass zumindest ein Teil der Deckplattenrastmitttel, beispielsweise vier Rastarme, zum Befestigen der Anschlussvorrichtung in einer Einbausituation ausgebildet sind. Die Anschlussvorrichtung kann somit beispielsweise durch formschlüssiges Verrasten der Deckplattenrastmittel mit einer Wandung in einer Ausnehmung in einer Wandung befestigt werden. Vorzugsweise sind zwei Deckplattenrastmittel zum zumindest vorläufigen Verrasten mit der Grundplatte und vier Deckplattenrastmittel zum Befestigen der Anschlussvorrichtung vorgesehen.

Gemäß einem weiteren Ausführungsbeispiel ist vorgesehen, dass das Kupplungselement auf einem Außenumfang mindestens ein Gegenrastmittel aufweist, insbesondere dass das Gegenrastmittel einen ersten Rastvorsprung mit einem sich zumindest teilumfänglich erstreckenden ersten Rastbereich aufweist, und dass der erste Rastvorsprung einen ersten Abstand in Längsrichtung von einer die Anschlussöffnungen umgebenden Stirnfläche aufweist, bevorzugt dass der erste Rastvorsprung eine erste radiale Höhe aufweist, besonders bevorzugt dass der erste Rastvorsprung einen im ersten Rastbereich umfänglich gegenüberliegenden, zweiten Rastbereich aufweist.

Das Gegenrastmittel erstreckt sich folglich auf dem Außenumfang des Kupplungselementes zumindest über einen Teil des Umfangs. Insbesondere erstreckt sich der erste Rastvorsprung des Gegenrastmittels in einem ersten Rastbereich sowie in einem gegenüberliegend auf dem Umfang angeordneten zweiten Rastbereich. Vorzugsweise erstrecken sich der erste Rastbereich und der zweite Rastbereich jeweils über etwa ein Viertel des Umfangs. Der erste Rastvorsprung weist eine erste radiale Höhe auf.

Zudem ist gemäß einer weiteren Ausgestaltung vorgesehen, dass das Gegenrastmittel einen zweiten Rastvorsprung mit einem sich zumindest teilumfänglich erstreckenden Rastbereich aufweist, und dass der zweite Rastvorsprung einen zweiten Abstand in Längsrichtung von einer die Anschlussöffnung umgebenden Stirnfläche aufweist, bevorzugt dass der zweite Rastvorsprung eine zweite radiale Höhe aufweist, besonders bevorzugt dass der zweite Rastvorsprung einen dem ersten Rastbereich umfänglich gegenüberliegenden, zweiten Rastbereich aufweist.

Vorzugsweise sind die ersten Rastbereiche und die zweiten Rastbereiche des ersten Rastvorsprungs und des zweiten Rastvorsprungs parallel zueinander angeordnet. Durch den ersten Rastvorsprung und den zweiten Rastvorsprung lassen sich beim Verrasten des Kupplungselementes mit der Grundplatte zwei Raststellungen, nämlich eine Vorraststellung und eine Vollraststellung realisieren, indem die radial flexiblen Rastelemente in der Kupplungsausnehmung zunächst mit dem ersten Rastvorsprung, als Vorraststellung, und anschließend mit dem zweiten Rastvorsprung, als Vollraststellung, verrasten.

Alternativ oder zusätzlich ist gemäß einer Weiterbildung der Anschlussvorrichtung vorgesehen, dass das Gegenrastmittel mindestens zwei Rastvorsprünge aufweist, insbesondere mindestens vier Rastvorsprünge, bevorzugt dass jeweils zwei Rastvorsprünge versetzt zur Längsachse gegenüberliegend zueinander angeordnet sind. Die Rastvorsprünge dienen dem Befestigen des Kupplungselements in der Grundplatte und wirken mit Kupplungsrastmitteln an der Grundplatte zusammen. Vorzugsweise weist das Kupplungselement vier Rastvorsprünge auf, die sich paarweise gegenüberliegend, jeweils auf einer Sekante an die Kupplungsausnehmung, außermittig erstrecken. Die Rastvorsprünge erstrecken sich vorzugsweise derart vom Außenumfang des Kupplungselements, dass die Enden der nebeneinander angeordneten Rastvorsprünge in einer gemeinsamen, gedachten Ebene liegen.

Die Befestigung des Kupplungselements lässt sich gemäß einer weiteren Ausgestaltung dadurch verbessern, dass das Kupplungselement auf einem Außenumfang mindestens eine, insbesondere zumindest teilweise umlaufende, Rastkante aufweist, bevorzugt zusätzlich mindestens eine Führungskante und/oder eine Verschlusskante aufweist. Besonders bevorzugt weisen die Rastkante, die Verschlusskante und die Führungskante unterschiedliche Abstände zu einer Stirnfläche des Kupplungselements auf. Beispielweise wirkt im Montagezustand das Sperrmittel der Grundplatte mit der Rastkante derart zusammen, dass das Kupplungselement in der Kupplungsausnehmung gehalten wird.

Die Rastkante, die Verschlusskante und/oder die Führungskante sind vorzugsweise derart ausgebildet, dass sie den Außenumfang des Kupplungselements zumindest teilweise umlaufend umgeben. Die Rastkante, die Führungskante und/oder die Verschlusskante sind vorzugsweise so ausgebildet, dass sie sich tangential an dem Außenumfang des Kupplungselements erstrecken.

Ferner ist gemäß einer weiteren bevorzugten Ausgestaltung vorgesehen, dass das Kupplungselement mindestens ein radial flexibles Plattenrastmittel auf seinem Außenumfang aufweist, und dass das Plattenrastmittel eine Einführschräge aufweist, die in Richtung eines zweiten, von dem Zugang der Anschlussöffnung abgewandten Endbereiches geneigt ist, insbesondere dass das Kupplungselement zwei identische, umfänglich gegenüberliegend angeordnete Plattenrastmittel aufweist. Das Plattenrastmittel ist so ausgebildet, dass die Grundplatte nach der Montage des Kupplungselementes in der Kupplungsausnehmung zwischen dem Gegenrastmittel und dem Plattenrastmittel gehalten wird, so dass das Kupplungselement nicht aus der Kupplungsausnehmung heraustreten kann. Bevorzugt ist das Plattenrastmittel als radial-flexibler Plattenhaltearm, insbesondere zwei gegenüberliegende Plattenhaltearme, ausgebildet

Das Kupplungselement verspannt die Grundplatte folglich zwischen dem Gegenrastmittel und dem Plattenrastmittel, insbesondere zwischen dem radial flexiblen Rastelement in der Kupplungsausnehmung und dem Gegenrastmittel.

Bei einer Grundplatte mit flexiblen Rastelementen in der Kupplungsausnehmung kann das Kupplungselement grundsätzlich von beiden Seiten in die Kupplungsausnehmung eingebracht werden, insbesondere aber aus der Richtung, bei der die flexiblen Rastelemente in der Kupplungsausnehmung dem starren Gegenrastmittel ausweichen müssen.

Bei einem Ausführungsbeispiel, bei dem die Platte lediglich rotationssymmetrische - einfache - Kupplungsausnehmungen aufweist, kann das Kupplungselement lediglich aus einer Richtung in die Kupplungsausnehmung eingebracht werden, nämlich aus der Richtung, bei der das flexible Plattenrastmittel temporär ausweicht, um anschließend mit der Grundplatte formschlüssig zu verrasten.

Gemäß einem weiteren bevorzugten Ausführungsbeispiel der Anschlussvorrichtung weist das Kupplungselement vorzugsweise einen zylinderartigen Kupplungsgrundkörper auf, wobei die Anschlussöffnung innerhalb des Kupplungsgrundkörpers ausgebildet ist, wobei an einer ersten Endseite des Kupplungsgrundkörpers der Zugang zur Anschlussöffnung und an einer zweiten Endseite der Fluidkanal mit einem Anschlussmittel, insbesondere einem Anschlussdorn, ausgebildet ist.

Der zylinderartige Kupplungsgrundkörper bildet folglich die Anschlussöffnung und verbindet diese an der zweiten Endseite mit einem Anschlussmittel, das insbesondere als Anschlussdorn zum Anschluss einer Schlauch- bzw. Rohrleitung ausgebildet ist. Auf dem Außenumfang des zylinderartigen Kupplungsgrundkörpers sind das vorbeschriebene Gegenrastmittel sowie vorzugsweise die beschriebenen Plattenrastmittel ausgebildet. Vorzugsweise sind die Plattenrastmittel und die Gegenrastmittel in einem Winkel von etwa 90° zueinander versetzt und in unterschiedlichen Höhen auf dem Umfang angeordnet. Der Abstand der Rastflächen des Gegenrastmittels, insbesondere des zweiten Rastvorsprungs, und des Plattenrastmittels entspricht etwa der Dicke der Grundplatte.

Ferner hat sich gemäß einer weiteren Ausgestaltung als bevorzugt herausgestellt, wenn die Anschlussöffnung mindestens einen Absatz zwischen zwei unterschiedlichen Innendurchmessern aufweist. An dem Innenumfang auf dem kleineren Innendurchmesser sind erfindungsgemäß eine Mehrzahl in Längsrichtung verlaufender Leckageausnehmungen vorgesehen.

Die Leckageausnehmungen dienen dazu, beispielsweise bei fehlerhaften Dichtungen austretendes Fluid hör- und/oder sichtbar nach außen zu führen. Die Mehrzahl der Leckageausnehmungen ist gleichmäßig über den Umfang der Anschlussöffnung verteilt.

Um die Verbindung zwischen Einsatzteil und Deckplatte zu verbessern, ist vorgesehen, dass das Einsatzteil mindestens ein Einsatzrastmittel aufweist, wobei das Einsatzrastmittel formschlüssig mit der Deckplatte verrastbar ist, und dass das Einsatzrastmittel als mindestens zwei Rasthaken ausgebildet ist, und insbesondere dass die beiden Rasthaken auf dem Umfang gegenüberliegend zueinander angeordnet sind. Die Rasthaken verrasten derart formschlüssig mit der Deckplatte, dass die Deckplatte und das Einsatzteil verbunden sind. Die Rasthaken sind selbst oder in Kombination mit zumindest einem Teil des Einsatzteils radial federelastisch, so dass die Rasthaken zunächst temporär ausweichen können, um anschließend mit der Deckplatte, insbesondere der Oberseite der Deckplatte, zu verrasten.

Gemäß einer weiteren Ausgestaltung ist zudem vorgesehen, dass das Einsatzteil mindestens einen hülsenartigen Einsatzteilgrundkörper aufweist, dass der Einsatzteilgrundkörper an einer ersten Endseite mindestens zwei, ausgehend vom Einsatzteilgrundkörper in Längsrichtung ausgebildete, radial flexible Haltearme aufweist, so dass der Verbindungsbereich als Steckeraufnahme zum Zusammenwirken mit einem Anschlussstecker einer Medienleitung ausgebildet ist, insbesondere dass an den Haltearmen jeweils mindestens ein Rastvorsprung ausgebildet ist.

Der hülsenartige Einsatzteilgrundkörper erstreckt sich zwischen einer ersten Endseite und einer zweiten Endseite. An der ersten Endseite sind mindestens zwei, vorzugsweise vier, besonders bevorzugt sechs, insbesondere acht Haltearme ausgebildet, die zumindest in ihren Endbereichen radial flexibel sind. Insbesondere ist an jedem Haltearm jeweils mindestens ein Rastvorsprung zum Zusammenwirken mit mindestens einem korrespondierenden Rastrücksprung an einem Anschlussstecker ausgebildet. An der zweiten Endseite des Einsatzteilgrundkörpers ist vorzugsweise das Rastmittel, insbesondere die Rasthaken, zum Verrasten des Einsatzteilgrundkörpers mit der Deckplatte ausgebildet. Ferner weist der Einsatzteilgrundkörper vorzugsweise auf seinem Außenumfang eine Nut zur Aufnahme einer Dichtung, insbesondere einer O-Ring-Dichtung, auf.

Vorzugsweise weist mindestens ein Haltearm an seiner dem Rastvorsprung gegenüberliegenden Seite mindestens ein Stützelement auf. Das Stützelement erstreckt sich insbesondere über die Hälfte der Breite des Haltearms, bevorzugt über die gesamte Breite des Haltearms. Das Stützelement ist etwa auf einem Drittel der Länge, bevorzugt auf der Hälfte der Länge, des Haltearms ausgehend von der ersten Endseite des Einsatzteils angeordnet.

Mit der Variation des Abstands des Stützelements zur ersten Endseite des Einsatzteils lässt sich das Verformungs- und insbesondere das Biegeverhalten des Haltearms beeinflussen. Das Stützelement verhindert zudem eine Beschädigung des Haltearms. Vorzugsweise weist mindestens ein Haltearm im Bereich der ersten Endseite des Einsatzteils eine, insbesondere halbschalenförmige, Aussparung auf, um den Verformungswiderstand des Haltearms zu reduzieren bzw. die radiale Ausweichbewegung des Haltearms zu vereinfachen. Vorzugsweise weisen mindestens zwei Haltearme, vorzugsweise drei, vier, fünf oder sechs Haltearme ein Stützelement und/oder eine Aussparung auf.

Als besonders vorteilhaft hat sich gemäß einer weiteren Ausgestaltung zudem herausgestellt, dass an dem Einsatzteilgrundkörper mehr als zwei Haltearme ausgebildet sind, und dass die Rastvorsprünge an zwei nebeneinanderliegenden Haltearmen einen unterschiedlichen Abstand in Längsrichtung zur ersten Endseite des Einsatzteilgrundkörpers aufweisen, insbesondere derart, dass für einen einbringbaren Anschlussstecker eine Vorraststellung und eine Vollraststellung realisierbar ist. Die nebeneinander angeordneten Haltearme weisen folglich jeweils alternierend einen Rastvorsprung erster Art, nämlich mit einem ersten, kürzeren Abstand zur Endseite, und die jeweils danebenliegenden Haltearme einen Rastvorsprung zweiter Art auf, dessen Abstand zur ersten Endseite des Einsatzteilgrundkörpers größer ist. Die Rastvorsprünge erster Art dienen dabei zur Realisierung der Vorraststellung, die Rastvorsprünge zweiter Art zur Realisierung der Vollraststellung. Insbesondere weisen die Haltearme mit einem Rastvorsprung zweiter Art ein Stützelement auf der Außenseite und/oder eine Aussparung auf.

Beispielsweise haben die Rastvorsprünge mit geringerem Abstand in Längsrichtung eine geringere Höhe als die Rastvorsprünge mit dem größeren Abstand in Längsrichtung.

Zur Erreichung der Vorraststellung greifen die Rastvorsprünge der Haltearme in einen für die Vorraststellung ausgebildeten Rastrücksprung am Anschlussstecker ein. Für die Vorraststellung sind die Rastvorsprünge so ausgelegt, dass die Rastverbindung auch bei maximalem Systemdruck innerhalb des Fluidkanals bestehen bleibt. Vorzugsweise sind im Einsatzteil, insbesondere in der Verbindungsschnittstelle, Leckagepfade definiert, insbesondere über Leckageausnehmungen, die in der Vorraststellung einen vordefinierten Druckverlust aus dem Fluidkanal zulassen. Vorzugsweise ist der Druckverlust so ausgelegt, dass eine Funktionsweise des Systems, beispielsweise einer Fahrzeugbremse, trotz Druckverlust erhalten bleibt. Bevorzugt ist zudem vorgesehen, dass durch das in der Vorraststellung entweichende Fluid ein Geräusch erzeugt wird, das auf die unvollständig gesteckte Verbindung hinweist.

Zur Erreichung der Vollraststellung müssen die Rastvorsprünge mit dem größeren Abstand in einen korrespondierenden Rücksprung am Anschlussstecker eingreifen. Bei entsprechenden Ausführungsbeispielen ist aufgrund der unterschiedlichen Höhe der Rastvorsprünge, insbesondere aufgrund der größeren Höhe der weiter entfernten Rastvorsprünge, eine größere Montagekraft erforderlich. In der Vollraststellung werden für die Rastverbindung die vordefinierten, vollständigen Haltekräfte erreicht, die eine vollständige Dichtheit gewährleisten.

Des Weiteren ist gemäß einer Ausgestaltung der Anschlussvorrichtung vorgesehen, dass das Einsatzteil einen ersten, umfänglich angeordneten Haltevorsprung zur Anlage an eine die Anschlussöffnung umgebende Stirnfläche und/oder einen zweiten umfänglich angeordneten Haltevorsprung zur Anlage an einer in der Anschlussöffnung angeordneten Anschlagfläche aufweist. Die Bewegung des Einsatzteils in Längsrichtung in die Anschlussöffnung wird folglich durch den ersten und/oder den zweiten umfänglich angeordneten Haltevorsprung begrenzt. Bei Krafteinwirkung in Längsrichtung, ausgehend von der Deckplatte, auf das Einsatzteil, stützt sich folglich das Einsatzteil an dem ersten Haltevorsprung und/oder an dem zweiten Haltevorsprung ab. Ferner dient der erste Haltevorsprung dem formschlüssigen Verrasten mit dem Rastmittel, insbesondere den Rasthaken.

Als besonders vorteilhaft hat sich zudem herausgestellt, wenn gemäß einer Ausgestaltung vorgesehen ist, dass das Einsatzteil im Wesentlichen flächenbündig in der Deckplatte angeordnet ist. Die zweite Endseite des Einsatzteils schließt folglich im Wesentlichen flächenbündig mit der Oberfläche der Deckplatte ab. Lediglich das Rastmittel zum Verrasten mit der Deckplatte, insbesondere die Rasthaken, stehen lokal hervor.

Besonders vorteilhaft ist ferner, wenn gemäß einem weiteren Ausführungsbeispiel das Einsatzteil mindestens einen dornartigen Stützabschnitt zum zumindest endseitigen Eintritt in eine Leitung, einen umlaufenden Zahnring zur Fixierung der Leitung sowie ein Löseelement zum Lösen der Verbindung zwischen Zahnring und Leitung umfasst. Die derart ausgebildete Verbindungsschnittstelle des Einsatzteils kann also den Endbereich einer Leitung unmittelbar aufnehmen und dichtend verbinden. Zum Lösen der Verbindung wird das Löseelement in Längsrichtung zu dem Zahnring geschoben, so dass der Zahnring elastisch verformt und die Verklemmung mit der Leitung gelöst wird.

Eine weitere vorteilhafte Ausgestaltung sieht vor, dass das Einsatzteil auf einem Außenumfang mindestens eine Dichtung aufweist. Die Dichtung ist insbesondere in einer umlaufenden Nut in dem Einsatzteil angeordnet.

Gemäß einer weiteren Ausgestaltung ist vorgesehen, dass das Einsatzteil auf einem ersten Innenumfang der Verbindungsschnittstelle eine Mehrzahl umfänglich angeordneter erster Leckageausnehmungen aufweist, und/oder dass das Einsatzteil in einem zweiten Innenumfang eine Mehrzahl umfänglich angeordneter, zweiter Leckageausnehmungen aufweist. Auch innerhalb der Verbindungsschnittstelle sind folglich Leckagepfade ausgebildet, so dass ungewollt austretendes Fluid sichtbar nach außen geleitet wird.

Als besonders bevorzugt hat es sich zudem herausgestellt, wenn vorgesehen ist, dass die Anschlussvorrichtung mindestens vier, bevorzugt mindestens sechs Anschlussöffnungen umfasst.

Vorzugsweise sind die Bauteile aller vorbeschriebenen Ausführungsbeispiele, insbesondere das Einsatzteil, nämlich der Einsatzteilgrundkörper, aus einem Kunststoff, insbesondere einem mit Glasfasern verstärkten Kunststoff, hergestellt. Vorteilhaft ist das Kupplungselement aus Polybutylenterephthalat mit 30 % Glasfasern (PBT GF30) und/oder das Einsatzteil aus Polyamid 12 mit 30 % Glasfaser oder Polyamid 11 mit 30 % Glasfaser hergestellt.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel einer Anschlussvorrichtung für Medienleitungen in perspektivischer Ansicht,
- Fig. 2: das Ausführungsbeispiel gemäß Fig. 1 in erster Schnittansicht,
- Fig. 3: das Ausführungsbeispiel gemäß Fig. 1 in zweiter Schnittansicht,
- Fig. 4: das Ausführungsbeispiel gemäß Fig. 1 in teilweiser Explosionsansicht,
- Fig. 5: das Ausführungsbeispiel gemäß Fig. 1 ohne Anschlussstecker,
- Fig. 6: ein weiteres Ausführungsbeispiel einer Anschlussvorrichtung in perspektivischer Ansicht,
- Fig. 7: das Ausführungsbeispiel gemäß Fig. 6 in teilweiser Explosionsdarstellung,
- Fig. 8: das Ausführungsbeispiel gemäß Fig. 6 in teilweiser Explosionsdarstellung,
- Fig. 9: eine Schnittansicht durch das Ausführungsbeispiel gemäß Fig. 6,
- Fig. 10: eine zweite Schnittansicht durch das Ausführungsbeispiel gemäß Fig. 6,
- Fig. 11: ein weiteres Ausführungsbeispiel einer Anschlussvorrichtung in perspektivischer Ansicht,
- Fig. 12: das Ausführungsbeispiel gemäß Fig. 11 in erster Schnittansicht,
- Fig. 13: das Ausführungsbeispiels gemäß Fig. 11 in teilweiser Explosionsdarstellung,
- Fig. 14: das Ausführungsbeispiel gemäß Fig. 11 in teilweiser Explosionsdarstellung,
- Fig. 15: das Ausführungsbeispiel gemäß Fig. 11 ohne eingebrachte Anschlussstecker,
- Fig. 16: ein Ausführungsbeispiel eines Kupplungselements gemäß Fig. 7 und Fig. 13,
- Fig. 17a: ein Ausführungsbeispiel eines Einsatzteils in perspektivischer Ansicht,
- Fig. 17b: ein Ausführungsbeispiel des Einsatzteils gemäß Fig. 17a in Schnittansicht,
- Fig. 18: ein Ausführungsbeispiel einer Anschlussvorrichtung für Medienleitungen in perspektivischer Ansicht,
- Fig. 19: das Ausführungsbeispiel gemäß Fig. 18 in teilweiser Explosionsansicht,
- Fig. 20a: das Ausführungsbeispiel gemäß Fig. 18 in teilweiser Draufsicht,
- Fig. 20b: das Ausführungsbeispiel gemäß Fig. 18 in teilweiser Schnittansicht,
- Fig. 21: das Ausführungsbeispiel gemäß Fig. 18 in teilweiser Explosionsansicht,
- Fig. 22: ein Ausführungsbeispiel eines Kupplungselements gemäß Fig. 19, Fig. 20 und Fig. 21,
- Fig. 23: ein Ausführungsbeispiel eines Einsatzteils in geschnittener Ansicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

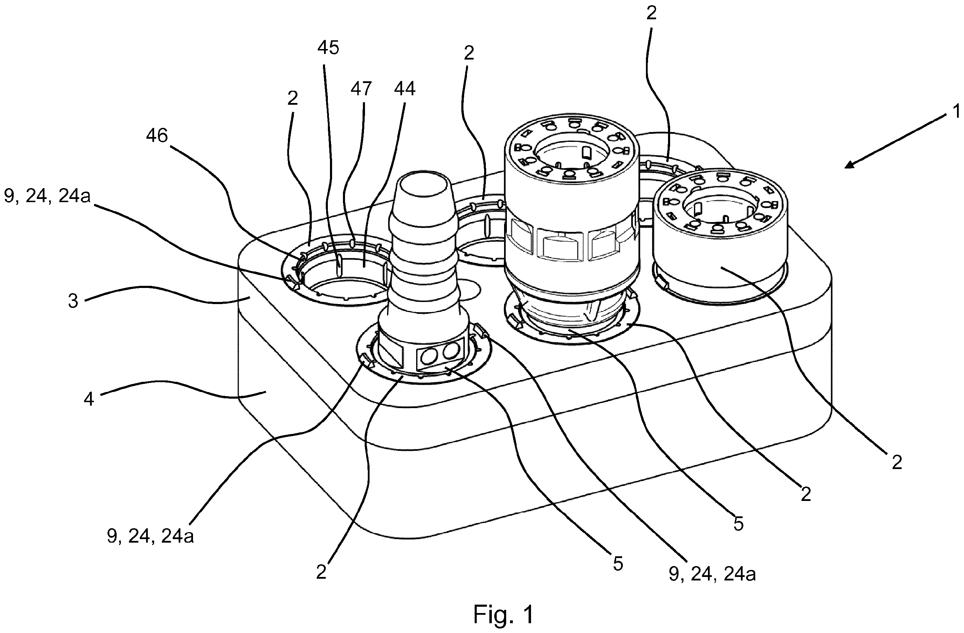

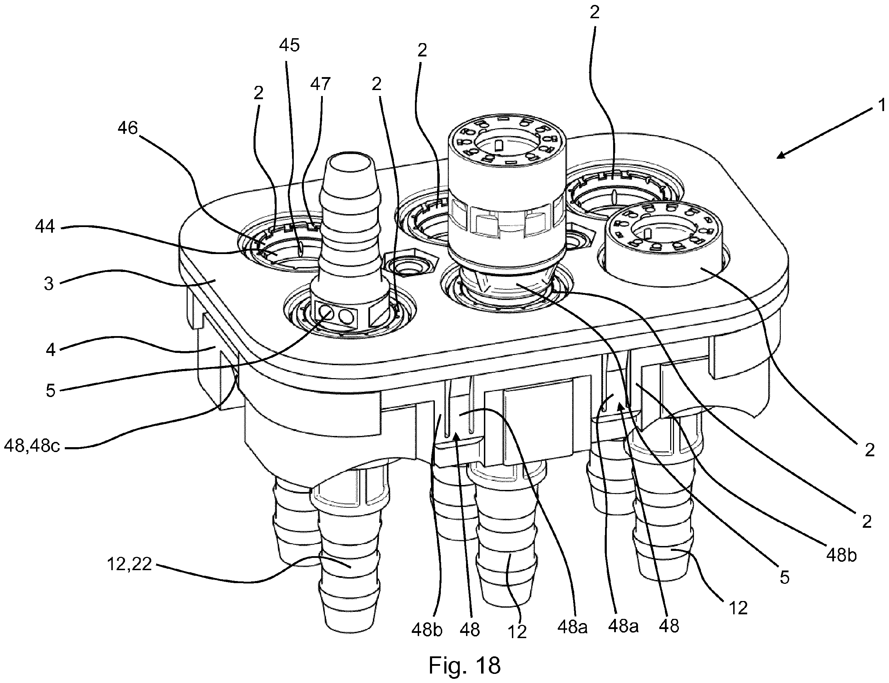

Fig. 1, Fig. 6, Fig. 11 und Fig. 18 zeigen Ausführungsbeispiele einer Anschlussvorrichtung 1 für Medienleitungen in einer perspektivischen Ansicht. Die Anschlussvorrichtung 1 weist sechs Einsatzteile 2, eine Deckplatte 3 und eine Grundplatte 4 auf. Die Deckplatte 3 ist mit der Grundplatte 4 verbunden, insbesondere mit der Grundplatte 4 verschraubt. Bei dem Ausführungsbeispiel der Fig. 18 ist die Deckplatte 3 mit der Grundplatte 4 zusätzlich formschlüssig verrastet, insbesondere zumindest in einer Vorraststellung. Beispielhaft sind in zwei der Einsatzteile 2 - jeweils die vorne links dargestellten Einsatzteile 2 - unterschiedliche Anschlussstecker 5 eingesteckt.

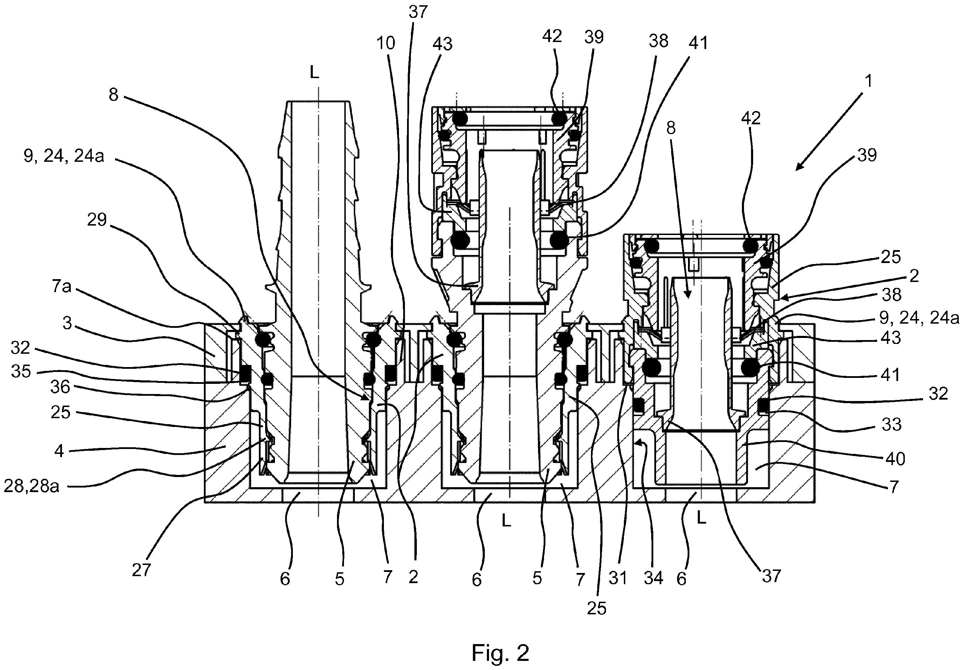

Fig. 2 zeigt das Ausführungsbeispiel einer Anschlussvorrichtung 1 gemäß Fig. 1 in geschnittener Ansicht, nämlich gemäß Fig. 1 durch die vordere Reihe von Einsatzteilen 2. In der Grundplatte 4 sind sechs Anschlussöffnungen 7 vorgesehen, die bei diesem Ausführungsbeispiel unmittelbar in der Grundplatte 7 ausgebildet sind. Bei der Grundplatte 7 handelt es sich hier um eine Ventilplatte. Die Anschlussöffnungen 7 münden in Fluidkanäle 6, wobei die Anschlussöffnungen 7 zur zumindest teilweisen Aufnahme von Einsatzteilen 2 ausgebildet sind. Die Einsatzteile 2 weisen jeweils eine Verbindungsschnittstelle 8 zum Herstellen einer Verbindung mit einer Medienleitung auf. Bei dem gemäß Fig. 2 ganz rechts dargestellten Einsatzteil 2 handelt es sich um ein Einsatzteil 2, das unmittelbar eine Leitung verbinden kann und an anderer Stelle näher beschrieben wird. Der gemäß Fig. 2 in der Mitte dargestellte Anschlussstecker 5 umfasst eine Verbindungsschnittstelle 8, die gemäß der Verbindungsschnittstelle 8 des Einsatzteils 2 ausgebildet ist, das in Fig. 2 ganz rechts dargestellt ist.

Die Einsatzteile 2 sind lösbar zumindest teilweise in die Anschlussöffnungen 7 eingebracht und werden durch die Deckplatte 3, die mit der Grundplatte 4 verbunden ist, in ihrer Position gehalten. Die Einsatzteile 2 weisen ferner mindestens ein Verbindungsmittel 9 auf, mit dem die Deckplatte 3 mit dem Einsatzteil 2 verbindbar ist. Das Verbindungsmittel 9, nämlich das Einsatzrastmittel 24, ist hier als zwei Rasthaken 24a ausgebildet, die formschlüssig mit der Deckplatte 3 verrasten.

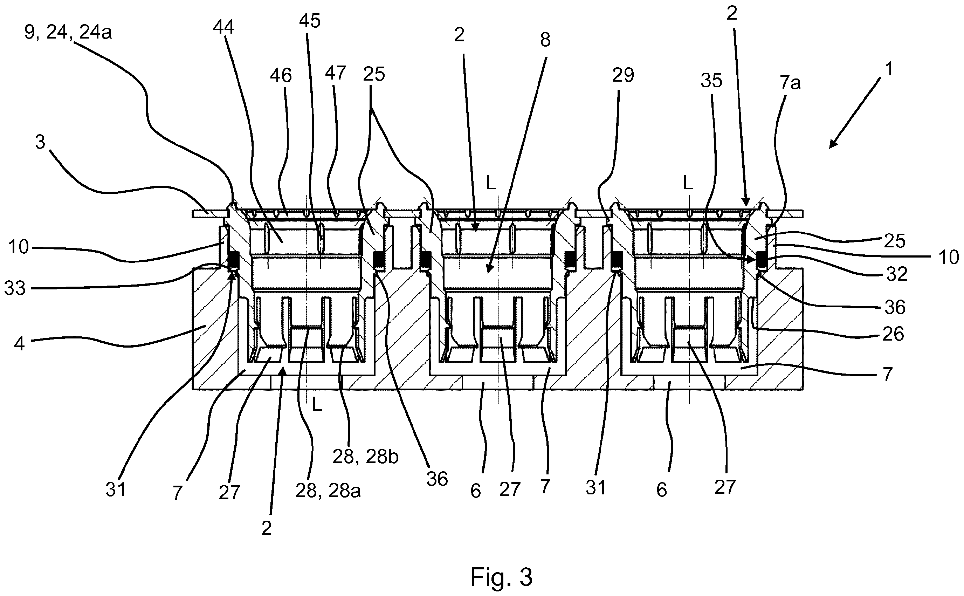

Fig. 3 zeigt einen Schnitt durch die gemäß Fig. 1 hintere Reihe von Anschlussöffnungen 7 mit Einsatzteilen 2. Die Einsatzteile 2 sind durch die mit der Grundplatte 4 verbundene Deckplatte 3 in den Anschlussöffnungen 7 gehalten. Die Rasthaken 24a sind mit der Deckplatte 3 formschlüssig verrastet. Die Einsatzteile 2 sind vollständig identisch ausgebildet. Die Einsatzteile 2 liegen mit einem Haltevorsprung 29 an der die Anschlussöffnung 7 umgebenden Stirnfläche 7a an.

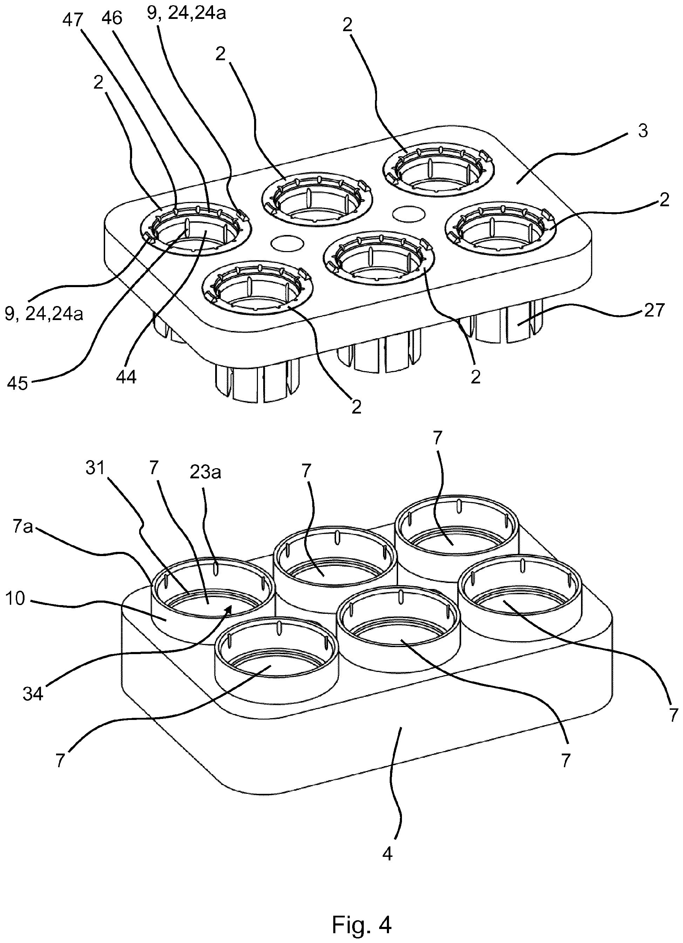

Fig. 4 zeigt eine teilweise Explosionsdarstellung einer Deckplatte 3 mit daran formschlüssig befestigten Einsatzteilen 2 sowie der Grundplatte 4, bei der die Anschlussöffnungen 7 unmittelbar in der Grundplatte 4 ausgebildet sind. Ferner weist die Grundplatte 4 gemäß Fig. 4 sechs die Anschlussöffnungen 7 zumindest teilweise umgebende, hülsenartige Abschnitte 10 auf. Alle Anschlussöffnungen 7 mit den hülsenartigen, kragenartig hervorstehenden Abschnitten 10 sind identisch ausgebildet. Die in dieser Darstellung mit der Deckplatte 3 formschlüssig verrasteten Einsatzteile 2 sind identisch ausgebildet. Das Einsatzteil 2 in der Anschlussöffnung 7 vorne rechts, ist im Vergleich zu den Fig. 1 und Fig. 2 durch ein anderes ersetzt worden.

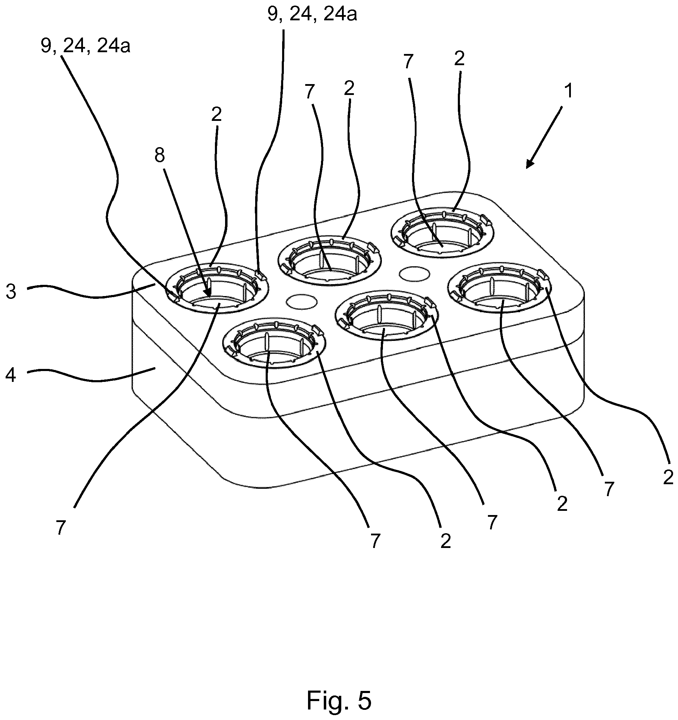

Fig. 5 zeigt das Ausführungsbeispiel gemäß Fig. 4 in montiertem Zustand, nämlich im verbundenen Zustand der Deckplatte 3 mit der Grundplatte 4. Die Einsatzteile 2 schließen flächenbündig mit der Oberfläche der Deckplatte 3 ab, lediglich die Rasthaken 24a ragen geringfügig hervor. Alle in die Anschlussöffnungen 7 eingesetzten Einsatzteile 2 sind identisch ausgebildet. Die Deckplatte 3 ist mit der Grundplatte 4 verschraubt.

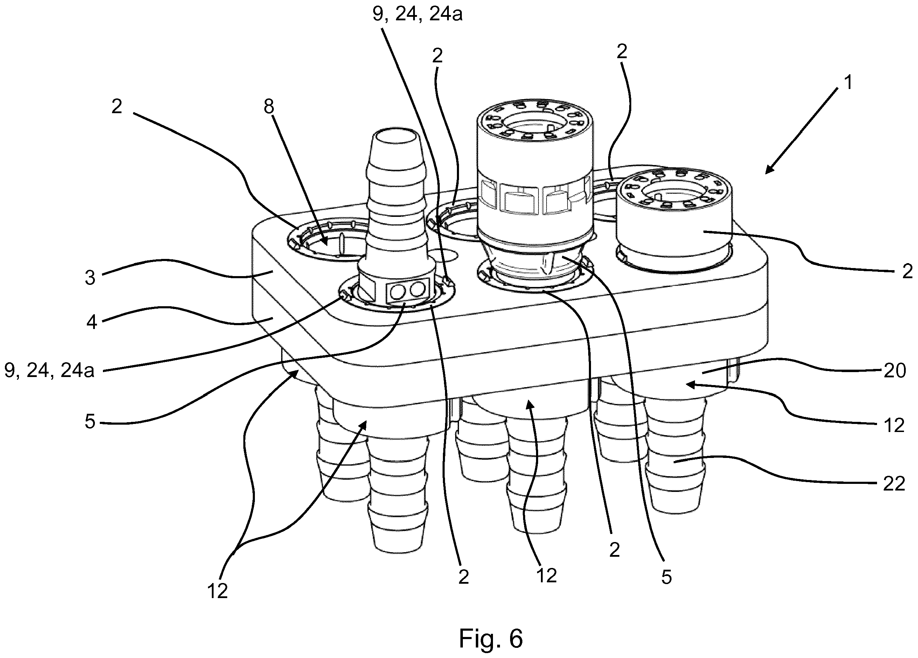

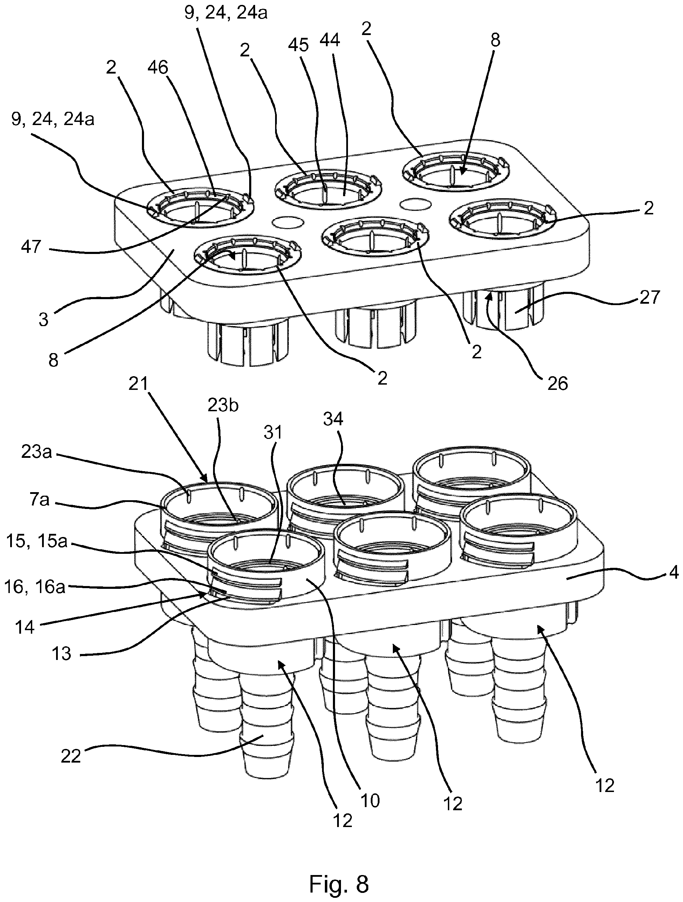

Fig. 6 zeigt ein Ausführungsbeispiel einer Anschlussvorrichtung 1 für Medienleitungen in einer perspektivischen Ansicht. Die Anschlussvorrichtung 1 weist sechs Anschlussöffnungen 7, eine Deckplatte 3 und eine Grundplatte 4 auf. Beispielhaft ist vorne ganz rechts ein von den anderen Einsatzteilen 2 verschiedenes Einsatzteil 2 eingesetzt. Vorne links und in der Mitte ist beispielhaft ein Anschlussstecker 5 mit den Verbindungsschnittstellen 8 (siehe Fig. 8) verbunden.

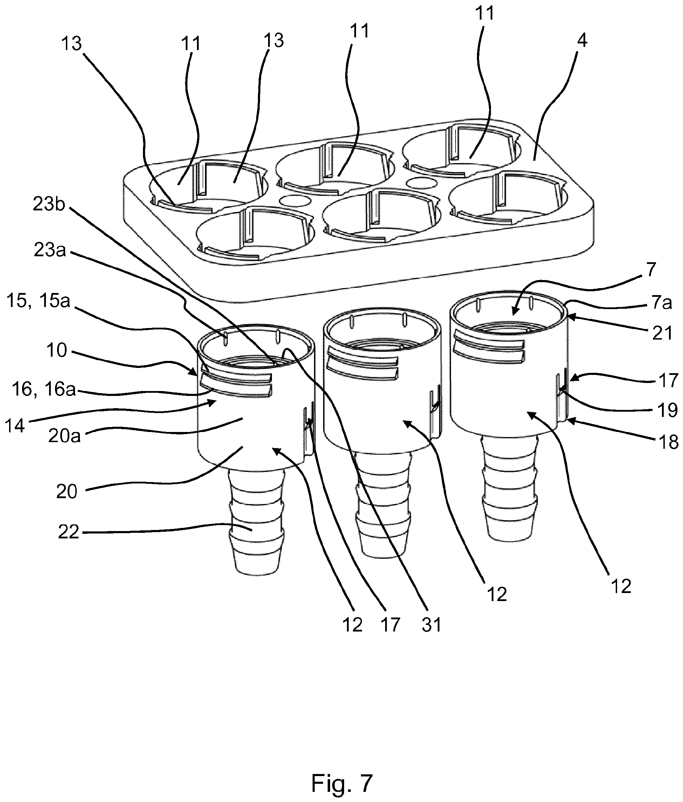

Fig. 7 zeigt die Grundplatte 4 gemäß dem Ausführungsbeispiel der Fig. 6, nämlich dass die Grundplatte 4 bei diesem Ausführungsbeispiel sechs Kupplungsausnehmungen 11 aufweist, und dass in die Kupplungsausnehmungen 11 jeweils ein Kupplungselement 12 eingesetzt und mit der Grundplatte 4 verbunden wird. Die Kupplungselemente 12 sind vollständig identisch ausgebildet, wobei hier beispielhaft nur drei dargestellt sind. Die Kupplungselemente 12 werden gemäß Fig. 7 von unten in die Kupplungsausnehmungen 11 eingebracht.

Fig. 8 zeigt die in den Kupplungsausnehmungen 11 der Grundplatte 4 montierten, nämlich formschlüssig verrasteten Kupplungselemente 12 gemäß Fig. 7. Gemäß Fig. 7 weist jede Kupplungsausnehmung 11 jeweils zwei gegenüberliegend angeordnete, radial flexible Rastelemente 13 auf, die eine formschlüssige Verbindung mit dem Kupplungselement 12, insbesondere einem an dem Kupplungselement 12 ausgebildeten und in den Fig. 7 und 8 dargestellten Gegenrastmittel 14, ermöglichen. Die Rastelemente 13 sind um die Mittelachse der Kupplungsausnehmung 11 gewölbt und erstrecken sich nahezu über die gesamte Dicke der Grundplatte 4 (siehe insbesondere Fig.7).

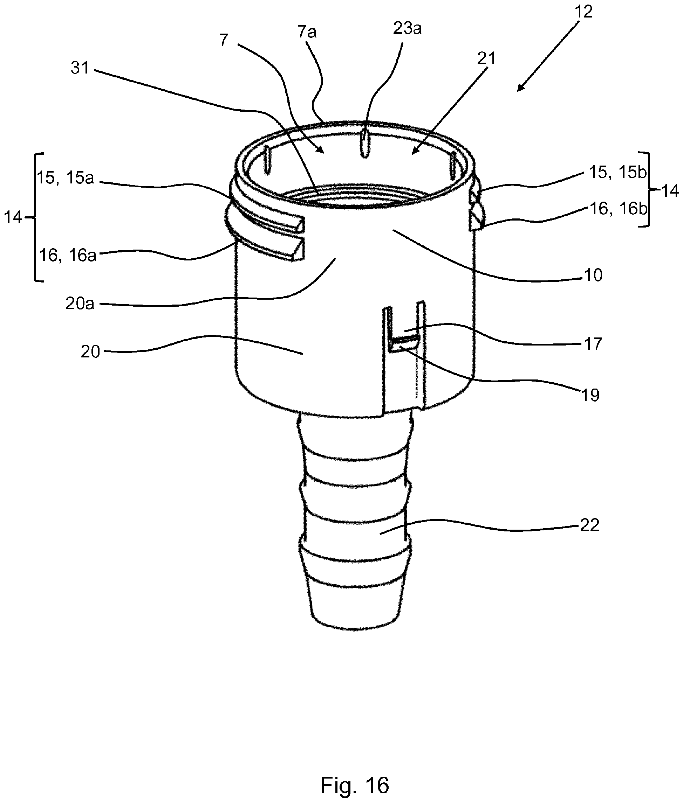

Das Gegenrastmittel 14 umfasst einen ersten Rastvorsprung 15 mit einem sich teilumfänglich erstreckenden ersten Rastbereich 15a sowie einen zweiten Rastvorsprung 16 mit einem sich zumindest teilumfänglich erstreckenden ersten Rastbereich 16a. Die Gegenrastmittel 14, nämlich die Rastvorsprünge 15, 16 sind auf einem Außenumfang 20a der Kupplungselemente 12, insbesondere des Kupplungsgrundkörpers 20 angeordnet. Insbesondere Fig. 16 ist zu entnehmen, dass der erste Rastvorsprung 15 einen zweiten Rastbereich 15b und der zweite Rastvorsprung 16 einen zweiten Rastbereich 16b auf dem Umfang gegenüberliegend aufweisen.

Fig. 7 zeigt ferner, dass die Kupplungselemente 12 jeweils zwei gegenüberliegend angeordnete, radial flexible Plattenrastmittel 17 aufweisen, die jeweils eine in Richtung einer, von dem Zugang der Anschlussöffnung 7 abgewandten, zweiten Endseite 18 geneigte Einführschräge 19 aufweisen.

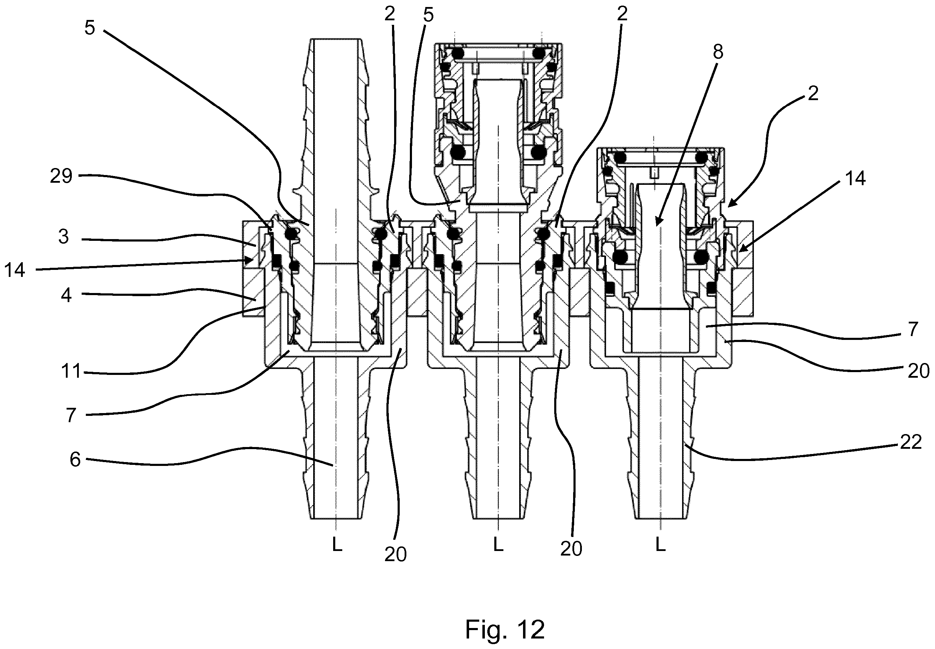

Die Kupplungselemente 12, insbesondere gemäß den Fig. 7, Fig. 8, Fig. 11, Fig. 12, Fig. 13, Fig. 14, Fig. 16 und Fig. 22, weisen einen zylinderartigen Kupplungsgrundkörper 20 auf, in dem die Anschlussöffnung 7 ausgebildet ist. An der ersten Endseite 21 ist der Zugang zur Anschlussöffnung 7 und an der zweiten Endseite 18 der Fluidkanal 6 mit einem Anschlussdorn 22 ausgebildet. An der ersten Endseite 21 ist im Randbereich der Anschlussöffnung 7 bei den Kupplungselementen 12 eine Mehrzahl parallel zur Längsrichtung orientierter Leckageausnehmungen 23a angeordnet, die bei nicht ordnungsgemäß eingebrachtem Einsatzteil 2 oder bei fehlerhafter Dichtung Fluid austreten lassen. Ferner weisen die Kupplungselemente 12 an dem Innenumfang 34 unterhalb der in der Anschlussöffnung 7 angeordneten Anschlagfläche 31 weitere Leckageausnehmungen 23b auf, die ebenfalls parallel zur Längsachse L - in Längsrichtung - orientiert sind (siehe insbesondere Fig. 12, Fig. 14 und Fig. 16).

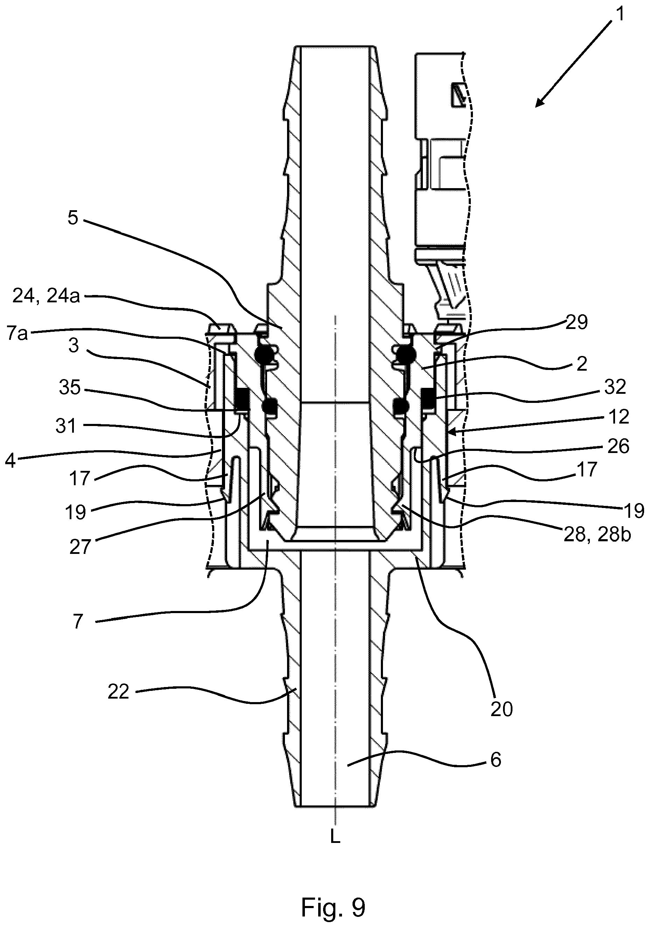

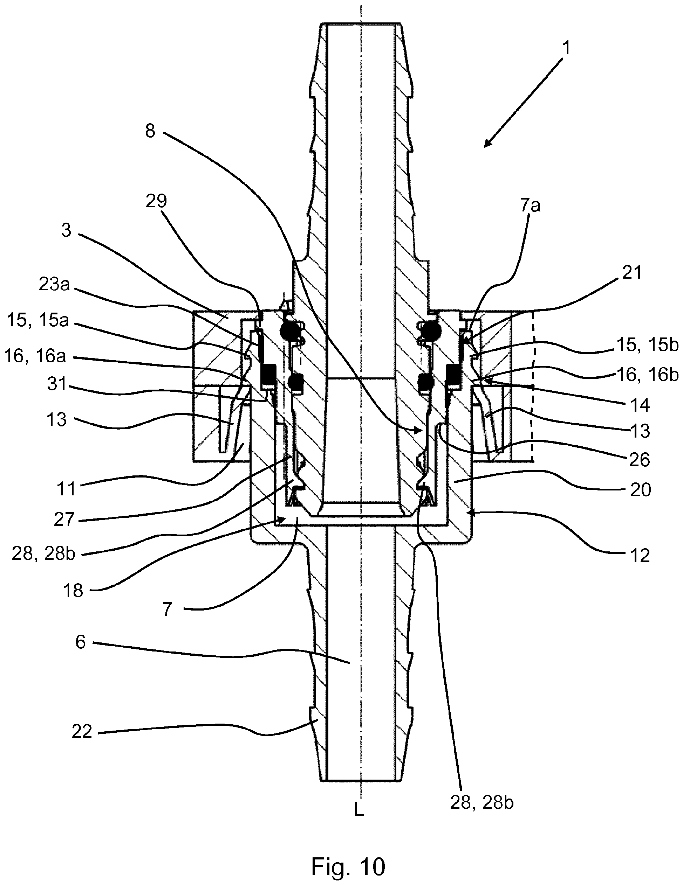

Fig. 9 zeigt einen Schnitt durch die Anschlussvorrichtung 1 gemäß Fig. 6, nämlich im Bereich der vorne links dargestellten Anschlussöffnung 7. Fig. 10 zeigt einen Schnitt im Bereich der gleichen Anschlussöffnung 7, der jedoch um 90° um die Längsachse L gedreht ist. Fig. 9 zeigt, dass die Plattenrastmittel 17 mit der Grundplatte 4 in Eingriff stehen. Ferner wird das Einsatzteil 2 durch die Deckplatte 3 in der Anschlussöffnung 7 gehalten, dadurch dass die Deckplatte 3 mit der Grundplatte 4 verbunden ist.

Fig. 10 zeigt, dass die radial flexiblen Rastelemente 13 in der Kupplungsausnehmung 11 von unten gegen den zweiten Rastvorsprung 16 des Gegenrastmittels 14 wirken und so das Kupplungselement 12 zwischen flexiblen Rastelementen 13 und den Plattenrastmitteln 17 an der Grundplatte 4 gehalten ist. Die Rastelemente 13 sind in ihren Endbereichen abgewinkelt, so dass sie sowohl mit dem ersten Rastvorsprung 15 als auch mit dem zweiten Rastvorsprung 16 verrasten können.

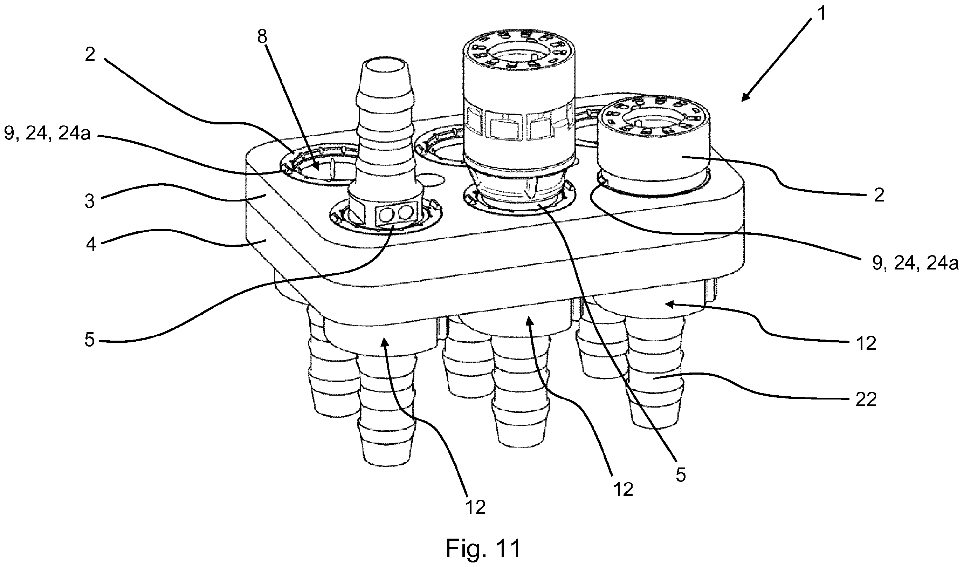

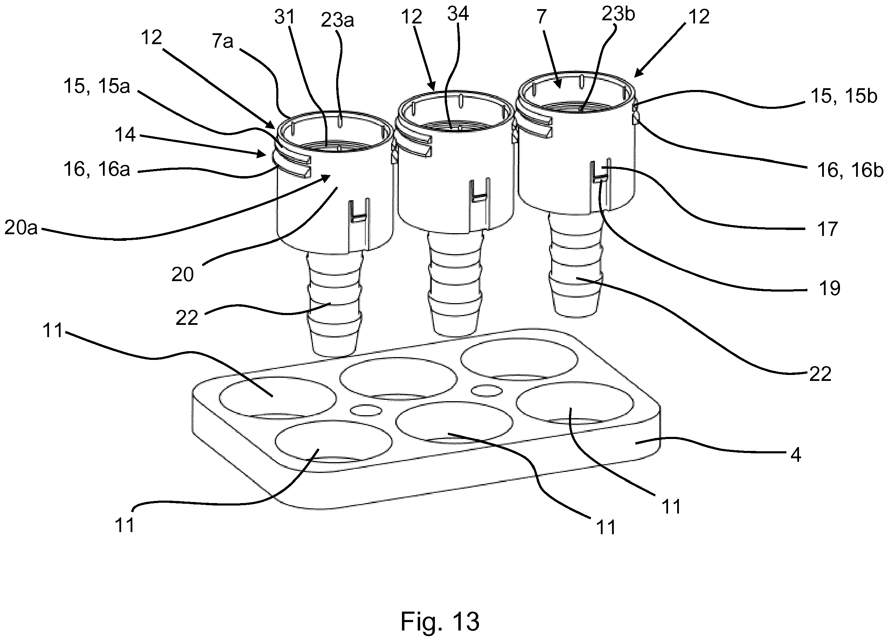

Fig. 11 zeigt - wie bereits ausgeführt - ein Ausführungsbeispiel einer Anschlussvorrichtung 1 für Medienleitungen in einer perspektivischen Ansicht. Fig. 12 zeigt einen Schnitt durch das Ausführungsbeispiel gemäß Fig. 11, nämlich durch die vordere Reihe der Einsatzteile 2. Die Einsatzteile 2 und Anschlussstecker 5 sind identisch zu dem Ausführungsbeispiel in Fig. 2 ausgebildet. Bei diesem Ausführungsbeispiel - gemäß Fig. 11, Fig. 12, Fig. 13, Fig. 14 und Fig. 15 - weist die Grundplatte 4 gemäß Fig. 13 lediglich rotationssymmetrische, durchgängige Kupplungsausnehmungen 11 auf, durch die die Kupplungselemente 12 von oben hereingebracht und dadurch fixiert werden, dass die flexiblen Plattenrastmittel 17 temporär radial nach innen ausweichen und anschließend von der Unterseite mit der Grundplatte 4 derart verrasten, dass die Grundplatte 4 zwischen dem Gegenrastmittel 14, insbesondere dem zweiten Rastvorsprung 16 des Gegenrastmittels 14, und den Plattenrastmitteln 17 verrasten.

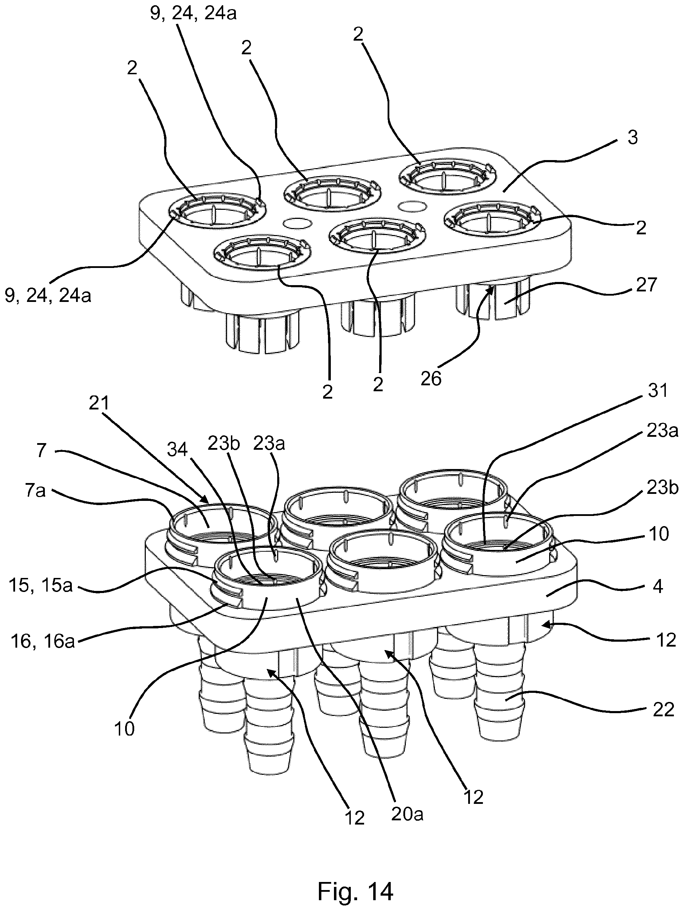

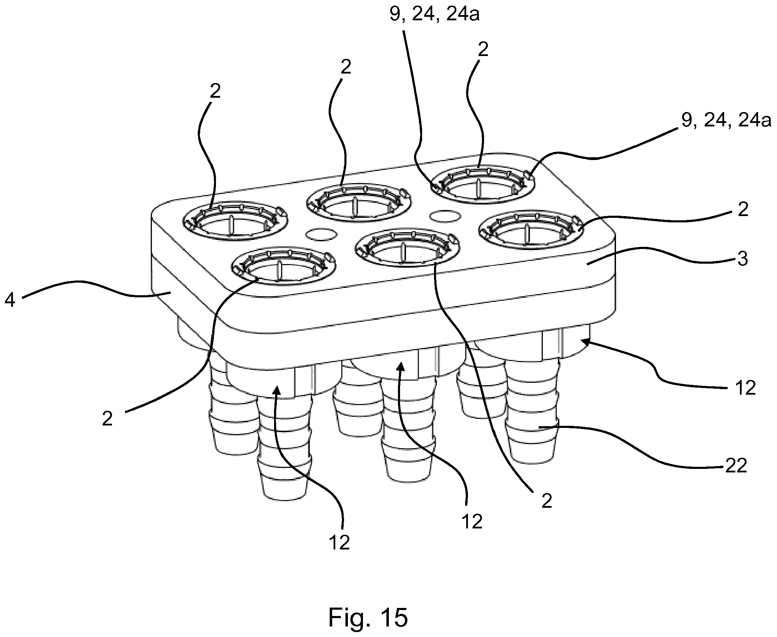

Die Deckplatte 3 mit den Einsatzteilen 2 wird gemäß Fig. 14 von oben aufgesetzt und anschließend die Deckplatte 3 mit der Grundplatte 4 verbunden, so dass das montierte Ausführungsbeispiel gemäß Fig. 15 entsteht. Deutlich zu erkennen ist, dass die Einsatzteile 2, wobei das Einsatzteil 2 vorne rechts in Fig. 14 und Fig. 15 ersetzt worden ist, im Wesentlichen flächenbündig mit der Deckplatte 3 ausgerichtet sind.

Fig. 2, Fig. 3, Fig. 9, Fig. 10, Fig. 12, Fig. 17a, Fig. 17b und 23 zeigen ferner, dass die Einsatzteile 2 vorzugsweise einen hülsenartigen Einsatzteilgrundkörper 25 sowie an einer ersten Endseite 26 acht von dem Einsatzteilgrundkörper 25 ausgehende, in Längsrichtung ausgebildete, radial flexible Haltearme 27 aufweisen, so dass die Verbindungsschnittstelle 8 als Steckeraufnahme zum Zusammenwirken mit einem Anschlussstecker 5 einer Medienleitung ausgebildet ist.

An jedem Haltearm 27 ist ein Rastvorsprung 28 ausgebildet, wobei die Rastvorsprünge 28 an zwei nebeneinanderliegenden Haltearmen 27 unterschiedliche Abstände in Längsrichtung zur ersten Endseite 26 des Einsatzteilgrundkörpers 25 aufweisen, so dass Rastvorsprünge 28a erster Art sowie Rastvorsprünge 28b zweiter Art vorhanden sind. Die Rastvorsprünge 28a erster Art haben einen geringeren Abstand in Längsrichtung als die Rastvorsprünge 28b zweiter Art. Einsatzteile 2 bzw. die Einsatzteilgrundkörper 25 weisen einen ersten umfänglich angeordneten Haltevorsprung 29 auf, der einerseits zur axialen Positionierung innerhalb der Anschlussöffnung 7, andererseits zum formschlüssigen Verrasten mit der Deckplatte 3 vorgesehen ist (siehe insbesondere Fig. 3, Fig. 9, Fig. 10 und Fig. 12). Das Einsatzteil 2 weist ferner ein, insbesondere radialfederelastisches, Einsatzrastmittel 24 als Verbindungsmittel 9 auf, das als zwei Rasthaken 24a ausgebildet ist. Die Rasthaken 24a wirken formschlüssig mit der Deckplatte 3 zusammen.

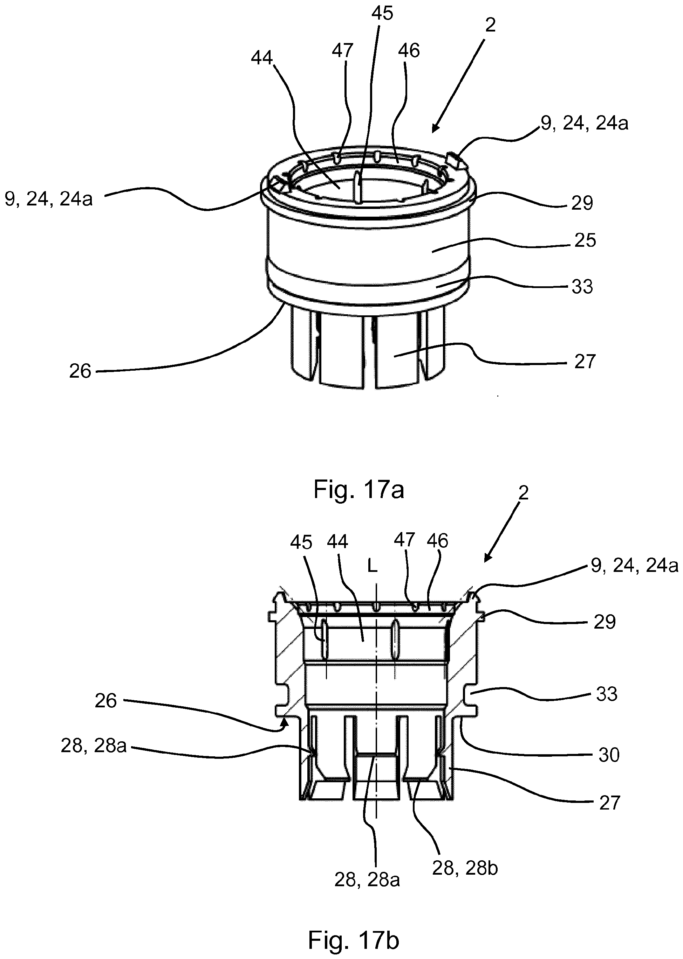

Gemäß Fig. 17a und Fig. 17b weist das Einsatzteil 2 zusätzlich einen zweiten umfänglich angeordneten Haltevorsprung 30 auf, der auch zur Anlage an einer in der Anschlussöffnung 7 angeordneten Anschlagfläche 31 - siehe Fig. 10 - dient. In einer Nut 33 auf dem Außenumfang des Einsatzteils 2 ist eine Dichtung 32, insbesondere O-Ring Dichtung, vorgesehen, die im Montagezustand in der Anschlussöffnung 7 anliegt.

Gemäß den in den Fig. 3, Fig. 9, Fig. 10 und Fig. 12 gezeigten Ausführungsbeispielen von Einsatzteilen 2 ist die Dichtung 32 auf einem Absatz 35 angeordnet und insbesondere durch einen Vorsprung 36 gegen Verlust vor der Montage gesichert.

Das in den Fig. 1, Fig. 2, Fig. 6, Fig. 11, Fig. 12 und Fig. 18 jeweils ganz rechts dargestellte Einsatzteil 2 dient zur unmittelbaren Verbindung mit einer - nicht dargestellten - Leitung. Die Einsatzteile 2 weisen jeweils einen dornartigen Stützabschnitt 37 auf, der zum zumindest teilweisen Eintreten in den Endabschnitt einer Leitung vorgesehen ist und einen Zahnring 38 zur Fixierung der Leitung, indem der Zahnring 38 die Leitung umfänglich verklemmt. Das Einsatzteil 2 umfasst ferner ein Löseelement 39, das parallel zur Längsrichtung zum Zahnring 38 verschiebbar ist und zum Lösen der Verklemmung zwischen Zahnring 38 und einer Leitung dient, indem der Zahnring 38 elastisch verformt wird. Der Stützabschnitt 37, der Zahnring 38 und das Löseelement 39 sind in dem Einsatzteilgrundkörper 25 gehalten.

Das Einsatzteil 2 umfasst ferner einen Führungskörper 40, der mit dem Einsatzteilgrundkörper 25 verrastet und vollständig in die Anschlussöffnung 7 einbringbar ist. Der Führungskörper 40 weist hier auch die Nut 33 für die Dichtung 32 auf. Das Einsatzteil 2 verfügt ferner über eine an die Leitung anlegbare Hauptdichtung 41 sowie eine eingangsseitig angeordnete Schmutzdichtung 42. Die Hauptdichtung 41 wird von einem Einsatzring 43 in Position gehalten, das auch den Zahnring 38 gegen den Einsatzteilgrundkörper 25 verspannt.

Gemäß den Fig. 1 bis Fig. 6 und Fig. 8, Fig. 11, Fig. 14, Fig. 15, Fig. 17a, 17b und 23 weist das Einsatzteil 2 bzw. der Einsatzteilgrundkörper 25 auf einem ersten Innenumfang 44 der Verbindungsschnittstelle 8 eine Mehrzahl umfänglich angeordneter erster Leckageausnehmungen 45 sowie in einem zweiten Innenumfang 46 eine Mehrzahl umfänglich angeordneter, zweiter Leckageausnehmungen 47 zur Ausbildung eines Leckagepfades auf. Die Leckageausnehmungen 45, 47 sind vorzugsweise parallel zur Längsachse L ausgebildet.

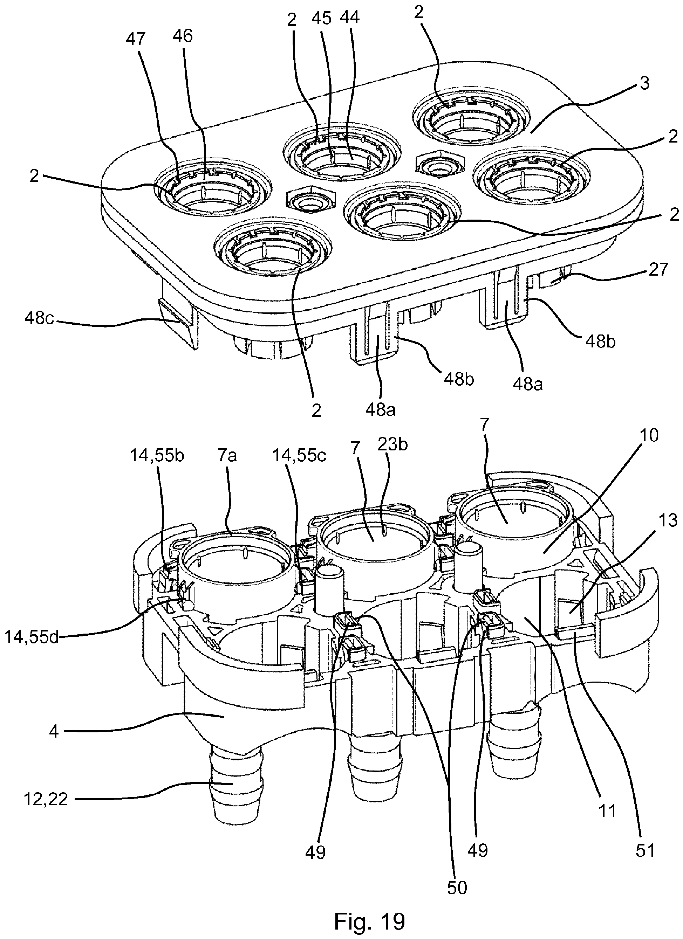

Gemäß Fig. 18 ist die Deckplatte 3 mittels zwei Deckplattenrastmitteln 48, die bei diesem Ausführungsbeispiel als flexible Rastarme 48c ausgebildet sind, in einer Vorraststellung mit der Grundplatte 4 formschlüssig verrastet (siehe Fig. 19). In dieser Vorraststellung sind definierte Leckagepfade ausgebildet. Eine abschließende Verbindung zwischen Deckplatte 3 und Grundplatte 4 erfolgt mittels Verschrauben, wodurch auch die Leckagepfade geschlossen werden. Die flexiblen Rastarme 48c dienen folglich dem vorläufigen Verbinden der Deckplatte 3 und der Grundplatte 4 zu Montagezwecken.

Ferner sind die Deckplattenrastmittel 48 bei diesem Ausführungsbeispiel als flexible Rastarme 48a mit einem starren Rahmen 48b ausgebildet (siehe Fig. 19). Die Rastarme 48a dienen dem Verbinden der Anschlussvorrichtung 1 in einer Einbausituation, beispielsweise in einer Ausnehmung in einer Wandung an einem Fahrzeug (nicht dargestellt). Dabei können die Rastarme 48a formschlüssig mit der Wandung verrasten. Gemäß Fig. 18 weisen die Einsatzteile 2 an einem ersten Innenumfang 44 eine Mehrzahl erster Leckageausnehmungen 45 sowie auf einem zweiten Innenumfang 46 eine Mehrzahl zweiter Leckageausnehmungen 47 auf.

Fig. 19 zeigt ein Ausführungsbeispiel einer Anschlussvorrichtung 1 in teilweiser Explosionsdarstellung, das mit Ausnahme des Einsatzteils 2 vorne rechts wie das Ausführungsbeispiel gemäß Fig. 18 ausgebildet ist. Die Deckplatte 3 weist sechs Kupplungsausnehmungen 11 auf, in die Einsatzteile 2 eingesetzt sind. Die Deckplatte 3 ist mittels der als flexible Rastarme 48c ausgebildeten Deckplattenrastmittel 48 vorläufig mit der Grundplatte 4 verrastbar. Die an der Längsseite angeordneten Deckplattenrastmittel 48 sind als flexible Rastarme 48a mit starrem Rahmen 48b ausgebildet und dienen der Befestigung der Anschlussvorrichtung 1 in einer Einbausituation.

Zum Verbinden mit Kupplungselementen 12 weist die Grundplatte 4 in der Kupplungsausnehmung 11 ein radial flexibles Rastelement 13 auf, dass formschlüssig mit dem Kupplungselement 12 verrastet. An jeder Kupplungsausnehmung 11 sind zudem zwei flexible Kupplungsrastmittel 49 in Form von Rastarmen angeordnet. Die Kupplungsrastmittel 49 sind versetzt zueinander angeordnet. Die Kupplungsrastmittel 49 einer Kupplungsausnehmung 11 sind auf zwei unterschiedlichen Seiten einer Ebene angeordnet, die die drei Mittelachsen der vorderen Kupplungsausnehmungen 11 beinhaltet. Die Kupplungsrastmittel 49 weisen jeweils eine Rastkante 50 auf, die im Wesentlichen tangential zur Kupplungsausnehmung 11 orientiert ist. Zudem weist die Grundplatte 4 an jeder Kupplungsausnehmung 11 ein flexibles Sperrmittel 51, hier in Form eines radial flexiblen Rastarms, auf. Im Montagezustand wird ein Kupplungselement 12 folglich durch den Rastarm 13, die Kupplungsrastmittel 49 und das Sperrmittel 51 in der Kupplungsausnehmung 11 fixiert.

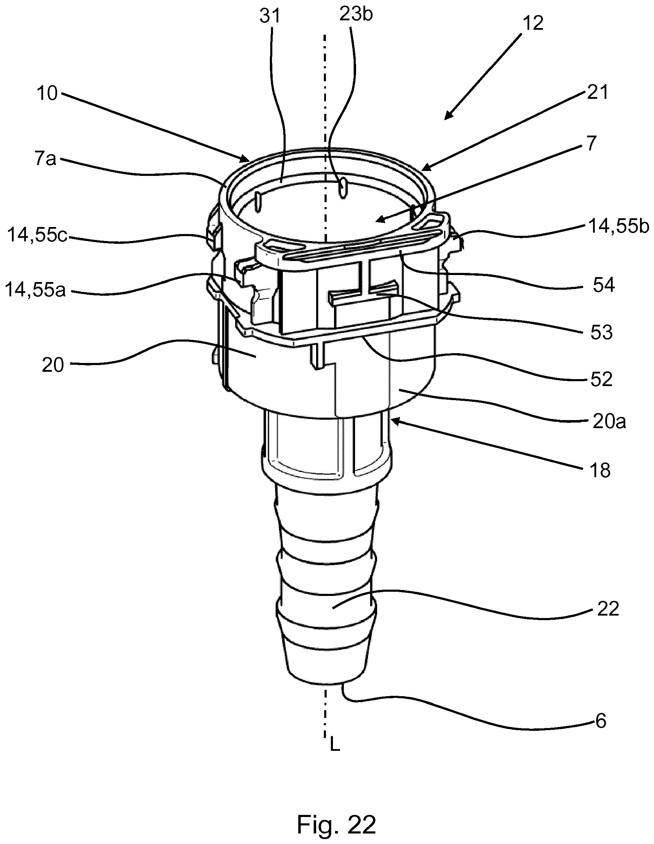

Die Kupplungselemente 12 der Fig. 18, Fig. 19, Fig. 20b und Fig. 21 verfügen gemäß Fig. 22 über eine umfänglich teilweise umlaufende Verschlusskante 52, eine Rastkante 53 und eine Führungskante 54. Die Verschlusskante 52, die Rastkante 53 und die Führungskante 54 weisen entlang der Längsachse L unterschiedliche Abstände zur Stirnkante 7a auf. Die Verschlusskante 52 dient dem zumindest teilweisen Verschließen der Kupplungsausnehmung 11.

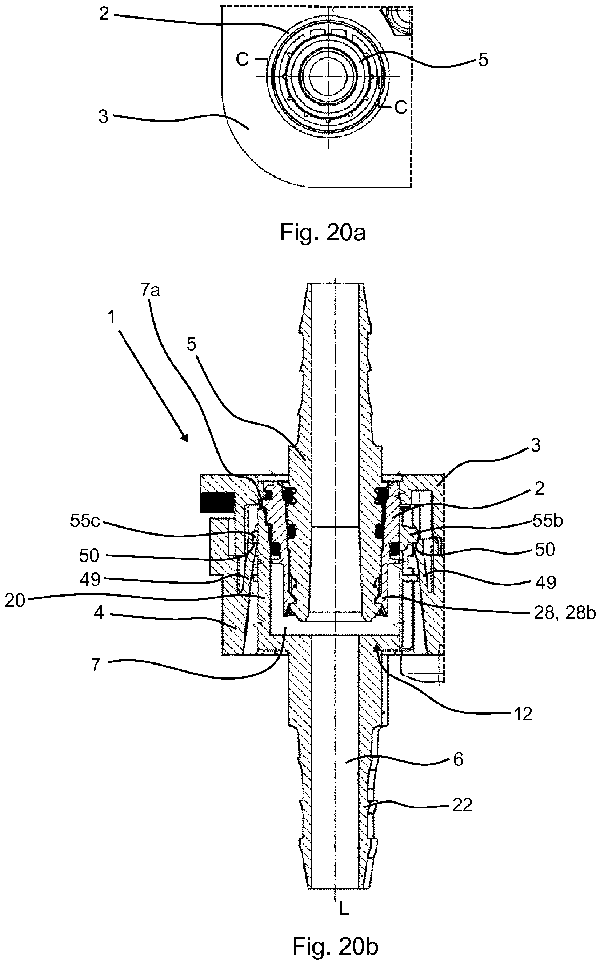

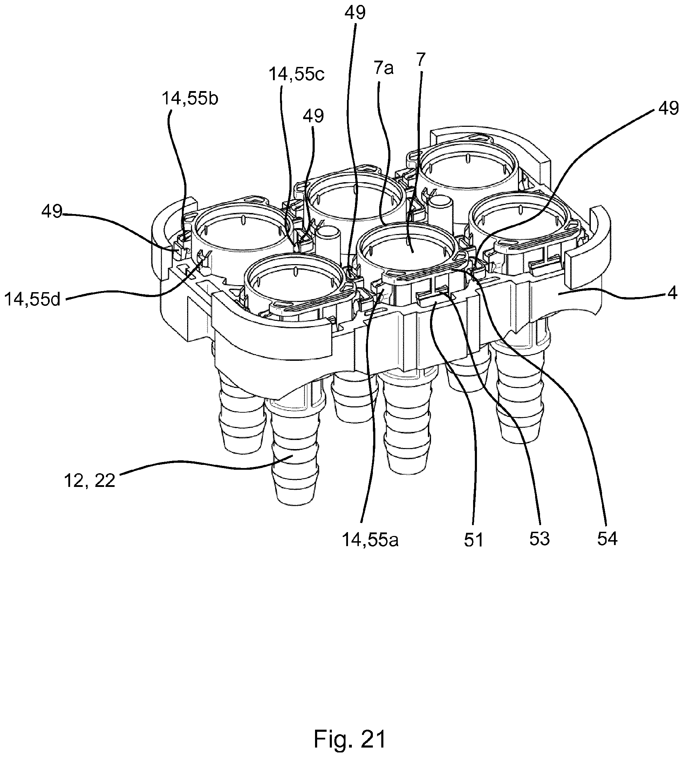

Im Montagezustand gemäß Fig. 21 wirkt das Sperrmittel 51 formschlüssig mit der Rastkante 53 zusammen. Zudem sind die versetzt zueinander angeordneten Kupplungsrastmittel 49 mit ihren Rastkanten 50, insbesondere gemäß Fig. 20, im Montagezustand mit dem Gegenrastmittel 14, insbesondere mit einem Rastvorsprung 55b und einem Rastvorsprung 55c des Gegenrastmittels 14, verrastet.

Der Schnitt gemäß Fig. 20b ist versetzt geführt, nämlich entlang der Linie C-C in Fig. 20a. Fig. 20a ist eine teilweise Draufsicht auf das Ausführungsbeispiel gemäß Fig. 18, insbesondere der des Einsatzteils 2 vorne links. Fig. 20b zeigt das formschlüssige Zusammenwirken der Rastkanten 50, der Kupplungsrastmittel 49 und der Rastvorsprünge 55c und 55b. Das Einsatzteil 2 ist an der Deckplatte 3 gehalten, ist in die Anschlussöffnung 7 des Kupplungselements 12 eingebracht und liegt an der Stirnfläche 7a des Kupplungselements 12 an. In das Einsatzteil 2 ist beispielhaft ein Anschlussstecker 5 eingebracht, der durch die Rastvorsprünge 28 gehalten wird. Bei diesem Ausführungsbeispiel ist das Kupplungselement 12 von unten, mit dem Kupplungsgrundkörper 20 voran, in die Grundplatte 4 eingeführt und verrastet worden.

Fig. 21 zeigt eine Grundplatte 4 mit sechs montierten Kupplungselementen 12, die jeweils durch formschlüssiges Verrasten der Kupplungsrastmittel 49 mit zwei Rastvorsprüngen 55b, 55c des Gegenrastmittels 14 und des Sperrmittels 51 mit der zweiten Rastkante 53 in den Kupplungsausnehmungen 11 gehalten werden. Die Kupplungsrastmittel 49 sind versetzt zueinander angeordnet, so dass sie mit den diagonal zueinander angeordneten Rastvorsprüngen 55b, 55c verrasten. Auf diese Grundplatte 4 ist eine Deckplatte 3 mit Einsatzelementen 2 gemäß Fig. 19 montierbar und zur abschließenden Befestigung verschraubbar.

Gemäß Fig. 19 bis 21 sind die Kupplungsrastmittel 49 derart versetzt zueinander angeordnet, dass sie im Montagezustand mit einem vorderen Rastvorsprung 55b und einem diagonal gegenüberliegenden, hinteren Rastvorsprung 55c zusammenwirken.

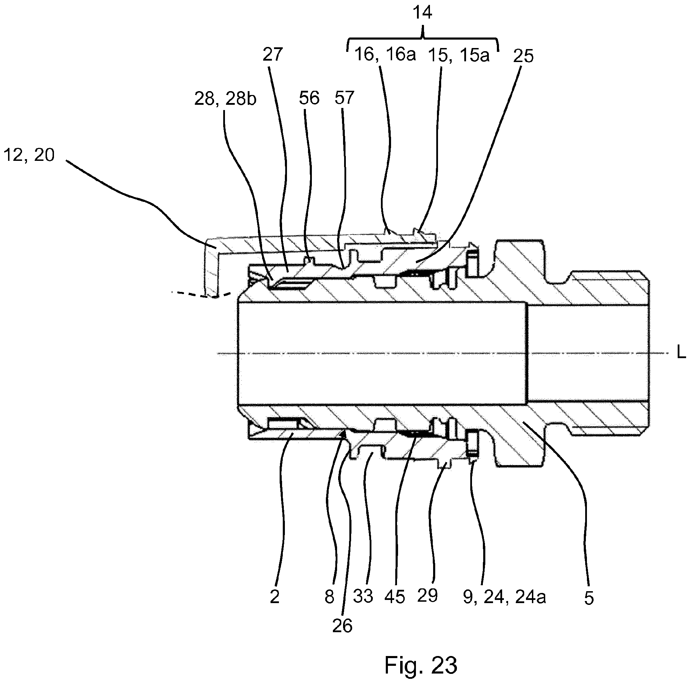

Fig. 22 zeigt ein Ausführungsbeispiel eines Kupplungselements 12 gemäß der Fig. 18 bis Fig. 21. Auf seinem Außenumfang 20a weist das Kupplungselement 12 ein Gegenrastmittel 14 mit vier Rastvorsprüngen 55a, 55b, 55c, 55d auf. Die Rastvorsprünge 55a, 55b, 55c, 55d sind so angeordnet, dass sie sich paarweise gegenüberliegen und auf einer Tangente oder einer Sekante an die Kupplungsausnehmung 11 angeordnet sind. Die Rastvorsprünge 55a, 55b, 55c, 55d erstrecken sich so weit von der Außenumfangsfläche 20a, dass die Enden der nebeneinander angeordneten Rastvorsprünge 55a, 55b, 55c, 55d, nämlich der Rastvorsprünge 55a und 55c sowie der Rastvorsprünge 55b und 55d, jeweils in einer gemeinsamen, gedachten Ebene liegen. Der Anschlussdorn 22 dient dem Anschließen des Fluidkanals 6 an eine - nicht dargestellte - Leitung. Fig. 23 zeigt ein weiteres Ausführungsbeispiel eines Einsatzteils 2 in geschnittener Seitenansicht. Das Einsatzteil 2 ist in einen nur teilweise dargestellten Kupplungsgrundkörper 20 eines Kupplungselements 12 eingebracht. In die Verbindungsschnittstelle 8 des Einsatzteils 2 ist beispielhaft ein Anschlussstecker 5 eingeführt und mit den Rastvorsprüngen 28, 28b der Haltearme 27 verrastet. Ein Teil der Haltearme 27, nämlich die Haltearme 27 mit einem Rastvorsprung zweiter Art 28b weisen auf ihrer in Richtung des Kupplungselements 12 gerichteten Außenseite jeweils ein Stützelement 56 auf. Das Stützelement 56 erstreckt sich über die gesamte Breite des jeweiligen Haltearms 27 und dient der Abstützung des Haltearms an dem Kupplungselement 12 in der Anschlussöffnung 7, insbesondere um eine Beschädigung des Haltearms 27 bei einer radialen Ausweichbewegung zu verhindern. Die radiale Ausweichbewegung erfolgt insbesondere durch bzw. bei Betriebsdruck, der auf das Einsatzteil 2, den Anschlussstecker 5 und die weiteren Bauteile wirkt. Dabei legt sich das Stützelement 56 an der Innenwand des Kupplungselements 12 an und beeinflusst das Biege- bzw. Verformungsverhalten des Haltearms 27. Ein Teil der Haltearme 27 weist zudem an der ersten Endseite 26 des Einsatzteils 2 eine Aussparung 57 auf, die die Wandstärke des Haltearms 27 reduziert und dadurch dessen Flexibilität steigert.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind.

### Bezugszeichenliste

- 1: Anschlussvorrichtung
- 2: Einsatzteil
- 3: Deckplatte
- 4: Grundplatte
- 5: Anschlussstecker
- 6: Fluidkanal
- 7: Anschlussöffnung
- 7a: Stirnfläche
- 8: Verbindungsschnittstelle
- 9: Verbindungsmittel
- 10: Hülsenartiger Abschnitt
- 11: Kupplungsausnehmung
- 12: Kupplungselement
- 13: Rastelemente
- 14: Gegenrastmittel
- 15: Erster Rastvorsprung
- 15a: Erster Rastbereich
- 15b: Zweiter Rastbereich
- 16: Zweiter Rastvorsprung
- 16a: Erster Rastbereich
- 16b: Zweiter Rastbereich
- 17: Plattenrastmittel
- 18: Zweite Endseite
- 19: Einführschräge
- 20: Kupplungsgrundkörper
- 20a: Außenumfang von 12
- 21: Erste Endseite
- 22: Anschlussdorn
- 23a: Leckageausnehmung
- 23b: Leckageausnehmung
- 24: Einsatzrastmittel
- 24a: Rasthaken
- 25: Einsatzteilgrundkörper
- 26: Erste Endseite
- 27: Haltearme
- 28: Rastvorsprung
- 28a: Rastvorsprung erster Art
- 28b: Rastvorsprung zweiter Art
- 29: Erster Haltevorsprung
- 30: Zweiter Haltevorsprung
- 31: Anschlagfläche
- 32: Dichtung
- 33: Nut
- 34: Innenumfang
- 35: Absatz
- 36: Vorsprung
- 37: Stützabschnitt
- 38: Zahnring
- 39: Löseelement
- 40: Führungskörper
- 41: Hauptdichtung
- 42: Schmutzdichtung
- 43: Einsatzring
- 44: Erster Innenumfang
- 45: erste Leckageausnehmung
- 46: Zweiter Innenumfang
- 47: zweite Leckageausnehmung
- 48: Deckplattenrastmittel
- 48a: Flexibler Rastarm
- 48b: Starrer Rahmen
- 48c: flexibler Rastarm
- 49: Kupplungsrastmittel
- 50: Rastkante
- 51: Sperrmittel
- 52: Verschlusskante
- 53: Rastkante
- 54: Führungskante
- 55a: Erster Rastvorsprung
- 55b: Zweiter Rastvorsprung
- 55c: Dritter Rastvorsprung
- 55d: Vierter Rastvorsprung
- 56: Stützelement
- 57: Aussparung
- L: Längsachse

## Patentansprüche

1. Anschlussvorrichtung (1) für Medienleitungen mit mindestens einem Einsatzteil (2), mindestens einer Deckplatte (3), mindestens einer Grundplatte (4), mindestens einem Fluidkanal (6) und mindestens einer Anschlussöffnung (7) zur zumindest teilweisen Aufnahme des Einsatzteils (2), wobei das Einsatzteil (2) eine Verbindungsschnittstelle (8) zum Herstellen einer Verbindung mit einer Medienleitung aufweist, wobei das Einsatzteil (2) lösbar zumindest teilweise in die Anschlussöffnung (7) einbringbar ist, wobei die Deckplatte (3) mit der Grundplatte (4) verbindbar ist, und wobei sich die Anschlussöffnung (7) zumindest teilweise in der Grundplatte (4) erstreckt, wobei das Einsatzteil (2) mindestens ein Verbindungsmittel (9) zum formschlüssigen Verrasten mit der Deckplatte (3) aufweist, das Verbindungsmittel (9) als mindestens zwei Rasthaken (24a) ausgebildet ist, die Rasthaken (24a) selbst oder in Kombination mit zumindest einem Teil des Einsatzteils (2) radial federelastisch sind, und die Anschlussöffnung (7) auf ihrem Innenumfang an einer ersten Endseite eine Mehrzahl in Längsrichtung verlaufender Leckageausnehmungen (23a) aufweist.

2. Anschlussvorrichtung (1) nach Anspruch 1,
**dadurch gekennzeichnet, dass**
die Anschlussöffnung (7) in der Grundplatte (4) ausgebildet ist, bevorzugt dass die Grundplatte (4) mindestens einen die Anschlussöffnung (7) teilweise umgebenden, hülsenartigen Abschnitt (10) aufweist, besonders bevorzugt dass die Grundplatte (4) Teil eines Aggregats, beispielsweise eines Ventilblocks oder Verteilers ist.

3. Anschlussvorrichtung (1) nach Anspruch 1,
**dadurch gekennzeichnet, dass**
die Grundplatte (4) mindestens eine Kupplungsausnehmung (11) aufweist, dass in die Kupplungsausnehmung (11) ein Kupplungselement (12) eingesetzt ist und mit der Grundplatte (4) verbunden ist, und dass die Anschlussöffnung (7) in dem Kupplungselement (12) ausgebildet ist, insbesondere dass das Kupplungselement (12) einen hülsenartigen Abschnitt (10) ausbildet, vorteilhaft dass die Grundplatte (4) in der Kupplungsausnehmung (11) mindestens ein radial flexibles Rastelement (13), insbesondere zwei gegenüberliegend angeordnete, radial flexible Rastelemente (13), aufweist, und dass mit dem Rastelement (13) eine formschlüssige Verbindung mit dem Kupplungselement (12) herstellbar ist, bevorzugt dass das Rastelement (13) an einem freien Endbereich abgewinkelt ist.

4. Anschlussvorrichtung (1) nach Anspruch 3,
**dadurch gekennzeichnet, dass**
die Grundplatte (4) an der Kupplungsausnehmung (11) mindestens ein flexibles Kupplungsrastmittel (49) aufweist, insbesondere mindestens zwei Kupplungsrastmittel (49) aufweist, bevorzugt dass das Kupplungsrastmittel (49) mindestens eine tangential zur Kupplungsausnehmung (11) angeordnete Rastkante (50) aufweist.

5. Anschlussvorrichtung (1) nach einem der Ansprüche 3 oder 4,
**dadurch gekennzeichnet, dass**
die Grundplatte (4) an der Kupplungsausnehmung (11) mindestens ein flexibles Sperrmittel (51) aufweist.

6. Anschlussvorrichtung (1) nach einem der Ansprüche 1 bis 5,
**dadurch gekennzeichnet, dass**
die Deckplatte (3) mindestens ein Deckplattenrastmittel (48), vorzugsweise eine Mehrzahl an Deckplattenrastmitteln (48), zum Verbinden mit der Grundplatte (4) und/oder zum Verbinden der Anschlussvorrichtung (1) in einer Einbausituation aufweist.

7. Anschlussvorrichtung (1) nach einem der Ansprüche 3 bis 6,
**dadurch gekennzeichnet, dass**
auf einem Außenumfang (20a) des Kupplungselements (12) ein Gegenrastmittel (14) ausgebildet ist, insbesondere dass das Gegenrastmittel (14) einen ersten Rastvorsprung (15) mit einem sich zumindest teilumfänglich erstreckenden ersten Rastbereich (15a) aufweist, und dass der erste Rastvorsprung (15) einen ersten Abstand in Längsrichtung von einer die Anschlussöffnung (7) umgebenden Stirnfläche (7a) aufweist, bevorzugt dass der erste Rastvorsprung (15) eine erste radiale Höhe aufweist, besonders bevorzugt dass der erste Rastvorsprung (15) einen dem ersten Rastbereich (15a) umfänglich gegenüberliegenden, zweiten Rastbereich (15b) aufweist, vorzugsweise dass das Gegenrastmittel (14) einen zweiten Rastvorsprung (16) mit einem sich zumindest teilumfänglich erstreckenden ersten Rastbereich (16a) aufweist, und dass der zweite Rastvorsprung (16) einen zweiten Abstand in Längsrichtung von einer die Anschlussöffnung (7) umgebenden Stirnfläche (7a) aufweist, bevorzugt dass der zweite Rastvorsprung (16) eine zweite radiale Höhe aufweist, besonders bevorzugt dass der zweite Rastvorsprung (16) einen dem ersten Rastbereich (16a) umfänglich gegenüberliegenden, zweiten Rastbereich (16b) aufweist.

8. Anschlussvorrichtung (1) nach Anspruch 7,
**dadurch gekennzeichnet, dass**
das Gegenrastmittel (14) mindestens zwei Rastvorsprünge (55a, 55b, 55c, 55d) aufweist, insbesondere mindestens vier Rastvorsprünge (55a, 55b, 55c, 55d), bevorzugt dass jeweils zwei Rastvorsprünge (55a, 55b, 55c, 55d) versetzt zur Längsachse (L) des Kupplungselements (12) gegenüberliegend zueinander angeordnet sind.

9. Anschlussvorrichtung (1) nach einem der Ansprüche 3 bis 8,
**dadurch gekennzeichnet, dass**
das Kupplungselement (12) auf einem Außenumfang (20a) mindestens eine, insbesondere zumindest teilweise umlaufende, Rastkante (53) aufweist, bevorzugt zusätzlich mindestens eine Verschlusskante (52) und/oder mindestens eine Führungskante (54) aufweist, weiter bevorzugt, dass die Rastkante (53), die Verschlusskante (52) und die Führungskante (54) unterschiedliche Abstände zu einer Stirnfläche (7a) des Kupplungselements (12) aufweisen.

10. Anschlussvorrichtung (1) nach einem der Ansprüche 3 bis 9,
**dadurch gekennzeichnet, dass**
das Kupplungselement (12) mindestens ein radial flexibles Plattenrastmittel (17) auf seinem Außenumfang (20a) aufweist, und dass das Plattenrastmittel (17) eine Einführschräge (19) aufweist, und dass die Einführschräge (19) in Richtung einer zweiten, von dem Zugang der Anschlussöffnung (7) abgewandten, Endseite (18) geneigt ist, insbesondere dass das Kupplungselement (12) zwei identische, umfänglich gegenüberliegend angeordnete Plattenrastmittel (17) aufweist.

11. Anschlussvorrichtung (1) nach einem der Ansprüche 3 bis 10,
**dadurch gekennzeichnet, dass**
dass das Kupplungselement (12) einen zylinderartigen Kupplungsgrundkörper (20) aufweist, dass die Anschlussöffnung (7) innerhalb des Kupplungsgrundkörpers (20) ausgebildet ist, dass an einer ersten Endseite (21) der Zugang zur Anschlussöffnung (7) und an einer zweiten Endseite (18) der Fluidkanal (6) mit einem Anschlussmittel, insbesondere einem Anschlussdorn (22), ausgebildet ist.

12. Anschlussvorrichtung (1) nach einem der Ansprüche 3 bis 10,
**dadurch gekennzeichnet, dass**
die Anschlussöffnung (7) auf ihrem Innenumfang an der ersten Endseite (21) eine Mehrzahl in Längsrichtung verlaufender Leckageausnehmungen (23a) aufweist, und/oder dass die Anschlussöffnung (7) mindestens einen Absatz zwischen zwei unterschiedlichen Innendurchmessern aufweist, und dass an dem Innenumfang auf dem kleineren Durchmesser eine Mehrzahl in Längsrichtung verlaufender Leckageausnehmungen (23b) vorgesehen ist.

13. Anschlussvorrichtung (1) einem der Ansprüche 1 bis 12,
**dadurch gekennzeichnet, dass**
das Einsatzteil (2) mindestens ein, insbesondere radial federelastisches, Einsatzrastmittel (24) aufweist, wobei das Einsatzrastmittel (24) formschlüssig mit der Deckplatte (3) verrastbar ist, insbesondere dass das Einsatzrastmittel (24) als mindestens zwei Rasthaken (24a) ausgebildet ist, und dass die beiden Rasthaken (24a) auf dem Umfang gegenüberliegend zueinander angeordnet sind.

14. Anschlussvorrichtung nach einem der Ansprüche 1 bis 13,
**dadurch gekennzeichnet, dass**
das Einsatzteil (2) mindestens einen hülsenartigen Einsatzteilgrundkörper (25) aufweist, dass der Einsatzteilgrundkörper (25) an einer ersten Endseite (26) mindestens zwei, ausgehend vom Einsatzteilgrundkörper (25) in Längsrichtung ausgebildete, radial flexible Haltearme (27) aufweist, so dass die Verbindungsschnittstelle (8) als Steckeraufnahme zum Verbinden mit einem Anschlussstecker (5) einer Medienleitung ausgebildet ist, insbesondere dass an den Haltearmen (27) jeweils mindestens ein Rastvorsprung (28) ausgebildet ist, bevorzugt dass mindestens ein Haltearm (27) auf der dem Rastvorsprung (28) gegenüberliegenden Seite mindestens ein Stützelement (56) und/oder eine Aussparung (57) aufweist, vorzugsweise dass
mehr als zwei Haltearme (27) ausgebildet sind, und dass die Rastvorsprünge (28) an zwei nebeneinanderliegenden Haltearmen (27) einen unterschiedlichen Abstand in Längsrichtung zu der ersten Endseite (26) aufweisen, insbesondere so dass für einen einbringbaren Anschlussstecker (5) eine Vorraststellung und eine Vollraststellung realisierbar sind.

15. Anschlussvorrichtung (1) nach einem der Ansprüche 1 bis 14,
**dadurch gekennzeichnet, dass**
das Einsatzteil (2) einen umfänglich angeordneten ersten Haltevorsprung (29) zur Anlage an einer Stirnfläche (7a) einer Anschlussöffnung (7), und/oder einen umfänglich angeordneten zweiten Haltevorsprung (30) zur Anlage an einer in der Anschlussöffnung (7) angeordneten Anschlagfläche (31) aufweist.

16. Anschlussvorrichtung (1) nach einem der Ansprüche 1 bis 15,
**dadurch gekennzeichnet, dass**
das Einsatzteil (2) im Wesentlichen flächenbündig mit der Deckplatte (3) angeordnet ist.

17. Anschlussvorrichtung (1) nach einem der Ansprüche 1 bis 16,
**dadurch gekennzeichnet, dass**
das Einsatzteil (2) auf einem Außenumfang mindestens eine Dichtung (32) aufweist, insbesondere dass die Dichtung (32) in einer umlaufenden Nut (33) in dem Einsatzteil (2) angeordnet ist.

18. Anschlussvorrichtung (1) nach einem der Ansprüche 1 bis 17,
**dadurch gekennzeichnet, dass**
das Einsatzteil (3) mindestens einen dornartigen Stützabschnitt (37) zum Eintritt in eine Leitung, mindestens einen Zahnring (38) zur Fixierung einer Leitung, sowie mindestens ein Löseelement (39) ausweist.

19. Anschlussvorrichtung (1) nach einem der Ansprüche 1 bis 18,
**dadurch gekennzeichnet, dass**
das Einsatzteil (2) auf einem ersten Innenumfang (44) der Verbindungsschnittstelle (8) eine Mehrzahl umfänglich angeordneter erster Leckageausnehmungen (45) aufweist, und/oder dass das Einsatzteil (2) in einem zweiten Innenumfang (46) eine Mehrzahl umfänglich angeordneter, zweiter Leckageausnehmungen (47) aufweist.

20. Anschlussvorrichtung (1) nach einem der Ansprüche 1 bis 19,
**dadurch gekennzeichnet, dass**
mindestens vier, bevorzugt mindestens sechs Anschlussöffnungen (7) vorhanden sind.

## Claims

1. Connection device (1) for media lines with at least one insert part (2), at least one cover plate (3), at least one base plate (4), at least one fluid channel (6) and at least one connection opening (7) for at least partially receiving the insert part (2), wherein the insert part (2) has a connection interface (8) for establishing a connection with a media line, wherein the insert part (2) can be detachably inserted at least partially into the connection opening (7), wherein the cover plate (3) can be connected to the base plate (4), and wherein the connection opening (7) extends at least partially in the base plate (4), wherein the insert part (2) comprises at least one connecting means (9) for positive latching with the cover plate (3), the connecting means (9) is designed as at least two latching hooks (24a), the latching hooks (24a) themselves or in combination with at least one part of the insert part (2) are radially resilient, and the connection opening (7) comprises a plurality of leakage recesses (23a) extending in the longitudinal direction on its inner circumference on a first end side.

2. Connection device (1) according to claim 1,
**characterized in that**
the connection opening (7) is formed in the base plate (4), preferably **in that** the base plate (4) comprises at least one sleeve-like section (10) partially surrounding the connection opening (7), particularly preferably **in that** the base plate (4) is part of an assembly, for example a valve block or distributor.

3. Connection device (1) according to claim 1,
**characterized in that**
the base plate (4) has at least one coupling recess (11), **in that** a coupling element (12) is inserted into the coupling recess (11) and is connected to the base plate (4), and **in that** the connection opening (7) is formed in the coupling element (12), in particular **in that** the coupling element (12) forms a sleeve-like section (10), advantageously that the base plate (4) comprises at least one radially flexible latching element (13) in the coupling recess (11), in particular two radially flexible latching elements (13) arranged opposite one another, and that with the latching element (13) a positive connection with the coupling element (12) can be established, preferably that the latching element (13) is angled at a free end region.

4. Connection device (1) according to claim 3,
**characterized in that**
the base plate (4) comprises at least one flexible coupling latching means (49) at the coupling recess (11), in particular comprises at least two coupling latching means (49), preferably **in that** the coupling latching means (49) comprises at least one latching edge (50) arranged tangentially to the coupling recess (11).

5. Connection device (1) according to one of claims 3 or 4,
**characterized in that**
the base plate (4) has at least one flexible locking means (51) at the coupling recess (11).

6. Connection device (1) according to any one of claims 1 to 5, **characterized in that**
the cover plate (3) comprises at least one cover plate latching means (48), preferably a plurality of cover plate latching means (48), for connecting to the base plate (4) and/or for connecting the connection device (1) in an installation situation.

7. Connection device (1) according to one of claims 3 to 6,
**characterized in that**
a mating latching means (14) is formed on an outer circumference (20a) of the coupling element (12), in particular **in that** the mating latching means (14) comprises a first latching projection (15) with a first latching region (15a) extending at least partially circumferentially, and that the first latching projection (15) has a first distance in the longitudinal direction from an end face (7a) surrounding the connection opening (7), preferably that the first latching projection (15) comprises a first radial height, particularly preferably that the first latching projection (15) comprises a second latching region (15b) located circumferentially opposite the first latching region (15a), preferably that the mating latching means (14) comprises a second latching projection (16) with a first latching region (16a) extending at least partially circumferentially, and that the second latching projection (16) has a second distance in the longitudinal direction from an end face (7a) surrounding the connection opening (7), preferably that the second latching projection (16) comprises a second radial height, particularly preferably that the second latching projection (16) comprises a second latching region (16b) circumferentially opposite the first latching region (16a).

8. Connection device (1) according to claim 7,
**characterized in that**
the mating latching means (14) comprises at least two latching projections (55a, 55b, 55c, 55d), in particular at least four latching projections (55a, 55b, 55c, 55d), preferably **in that** in each case two latching projections (55a, 55b, 55c, 55d) are arranged opposite one another offset relative to the longitudinal axis (L) of the coupling element (12).

9. Connection device (1) according to any one of claims 3 to 8,
**characterized in that**
the coupling element (12) comprises on an outer circumference (20a) at least one, in particular at least partially circumferential, latching edge (53), preferably additionally comprises at least one locking edge (52) and/or at least one guide edge (54), further preferably **in that** the latching edge (53), the locking edge (52) and the guide edge (54) comprise different distances from an end face (7a) of the coupling element (12).

10. Connection device (1) according to any one of claims 3 to 9,
**characterized in that**
the coupling element (12) comprises at least one radially flexible plate latching means (17) on its outer circumference (20a), and **in that** the plate latching means (17) comprises an insertion slope (19), and **in that** the insertion slope (19) is inclined in the direction of a second end side (18) facing away from the access of the connection opening (7), in particular **in that** the coupling element (12) comprises two identical plate latching means (17) arranged circumferentially opposite one another.

11. Connection device (1) according to any one of claims 3 to 10, **characterized in that**
**in that** the coupling element (12) comprises a cylindrical coupling base body (20), **in that** the connection opening (7) is formed inside the coupling base body (20), **in that** the access to the connection opening (7) is formed on a first end side (21) and the fluid channel (6) is formed on a second end side (18) with a connection means, in particular a connecting mandrel (22).

12. Connection device (1) according to any one of claims 3 to 10, **characterized in that**
the connection opening (7) comprises a plurality of leakage recesses (23a) running in the longitudinal direction on its inner circumference on the first end side (21), and/or **in that** the connection opening (7) comprises at least one shoulder between two different inner diameters, and **in that** a plurality of leakage recesses (23b) running in the longitudinal direction is provided on the inner circumference on the smaller diameter.

13. Connection device (1) according to any one of claims 1 to 12, **characterized in that**
the insert part (2) comprises at least one, in particular radially resilient, insert latching means (24), wherein the insert latching means (24) can be latched positively to the cover plate (3), in particular **in that** the insert latching means (24) is designed as at least two latching hooks (24a), and **in that** the two latching hooks (24a) are arranged opposite one another on the circumference.

14. Connection device according to any one of claims 1 to 13, **characterized in that**
the insert part (2) comprises at least one sleeve-like insert part base body (25), **in that** the insert part base body (25) comprises, on a first end side (26), at least two radially flexible retaining arms (27) which are formed in the longitudinal direction extending from the insert part base body (25), so that the connection interface (8) is formed as a plug receptacle for connection to a connector plug (5) of a media line, in particular that at least one latching projection (28) is formed on each of the retaining arms (27), preferably that at least one retaining arm (27) has at least one supporting element (56) and/or a recess (57) on the side opposite the latching projection (28), preferably that more than two retaining arms (27) are formed, and **in that** the latching projections (28) on two adjacent retaining arms (27) have a different distance in the longitudinal direction to the first end side (26), in particular so that a pre-latching position and a full latching position can be realized for an insertable connector plug (5).

15. Connection device (1) according to any one of claims 1 to 14, **characterized in that**
the insert part (2) comprises a circumferentially arranged first retaining projection (29) for bearing against an end face (7a) of a connection opening (7), and/or a circumferentially arranged second retaining projection (30) for bearing against a stop face (31) arranged in the connection opening (7).

16. Connection device (1) according to any one of claims 1 to 15, **characterized in that**
the insert part (2) is arranged essentially flush with the cover plate (3).

17. Connection device (1) according to any one of claims 1 to 16, **characterized in that**
the insert part (2) comprises at least one seal (32) on an outer circumference, in particular that the seal (32) is arranged in a circumferential groove (33) in the insert part (2).

18. Connection device (1) according to any one of claims 1 to 17, **characterized in that**
the insert part (3) comprises at least one mandrel-like support section (37) for entry into a line, at least one toothed ring (38) for fixing a line, and at least one release element (39).

19. Connection device (1) according to any one of claims 1 to 18, **characterized in that**
the insert part (2) comprises a plurality of circumferentially arranged first leakage recesses (45) on a first inner circumference (44) of the connection interface (8), and/or **in that** the insert part (2) comprises a plurality of circumferentially arranged second leakage recesses (47) in a second inner circumference (46).

20. Connection device (1) according to any one of claims 1 to 19, **characterized in that**
at least four, preferably at least six connection openings (7) are present.

## Revendications

1. Dispositif de raccordement (1) pour des conduites de fluide avec au moins une pièce d'insertion (2), au moins une plaque de recouvrement (3), au moins une plaque de base (4), au moins un canal de fluide (6) et au moins une ouverture de raccordement (7) pour recevoir au moins partiellement la pièce d'insertion (2), la pièce d'insertion (2) présentant une interface de liaison (8) pour établir une liaison avec une conduite de fluide, la pièce d'insertion (2) pouvant être introduite de manière amovible au moins partiellement dans l'ouverture de raccordement (7), la plaque de recouvrement (3) pouvant être reliée à la plaque de base (4), et l'ouverture de raccordement (7) s'étendant au moins partiellement dans la plaque de base (4),
la pièce d'insertion (2) présentant au moins un moyen de liaison (9) pour l'encliquetage par complémentarité de forme avec la plaque de recouvrement (3), le moyen de liaison (9) étant réalisé sous la forme d'au moins deux crochets d'encliquetage (24a), les crochets d'encliquetage (24a) étant eux-mêmes ou en combinaison avec au moins une partie de la pièce d'insertion (2) radialement élastiques, et l'ouverture de raccordement (7) présentant sur sa périphérie intérieure, sur un premier côté d'extrémité, une pluralité d'évidements de fuite (23a) s'étendant dans la direction longitudinale.

2. Dispositif de raccordement (1) selon la revendication 1,
**caractérisé en ce que**
l'ouverture de raccordement (7) est réalisée dans la plaque de base (4), de préférence que la plaque de base (4) présente au moins une section (10) en forme de douille entourant partiellement l'ouverture de raccordement (7), de manière particulièrement préférée que la plaque de base (4) fasse partie d'un ensemble, par exemple d'un bloc de vannes ou d'un distributeur.

3. Dispositif de raccordement (1) selon la revendication 1,
**caractérisé en ce que**
la plaque de base (4) présente au moins un évidement d'accouplement (11), **en ce qu'**un élément d'accouplement (12) est inséré dans l'évidement d'accouplement (11) et est relié à la plaque de base (4), et **en ce que** l'ouverture de raccordement (7) est formée dans l'élément d'accouplement (12), en particulier **en ce que** l'élément d'accouplement (12) forme une section en forme de douille (10), avantageusement **en ce que** la plaque de base (4) présente dans l'évidement d'accouplement (11) au moins un élément d'encliquetage (13) radialement flexible, en particulier deux éléments d'encliquetage (13) radialement flexibles disposés en face l'un de l'autre, et **en ce que** l'élément d'encliquetage (13) permet d'établir une liaison par complémentarité de forme avec l'élément d'accouplement (12), de préférence **en ce que** l'élément d'encliquetage (13) est coudé dans une zone d'extrémité libre.

4. Dispositif de raccordement (1) selon la revendication 3,
**caractérisé en ce que**
la plaque de base (4) présente au niveau de l'évidement d'accouplement (11) au moins un moyen d'encliquetage d'accouplement flexible (49), en particulier présente au moins deux moyens d'encliquetage d'accouplement (49), de préférence que le moyen d'encliquetage d'accouplement (49) présente au moins une arête d'encliquetage (50) disposée tangentiellement à l'évidement d'accouplement (11).

5. Dispositif de raccordement (1) selon l'une des revendications 3 ou 4, **caractérisé en ce que**
la plaque de base (4) présente au moins un moyen de blocage flexible (51) au niveau de l'évidement d'accouplement (11).

6. Dispositif de raccordement (1) selon l'une quelconque des revendications 1 à 5,
**caractérisé en ce que**
la plaque de recouvrement (3) présente au moins un moyen d'encliquetage de plaque de recouvrement (48), de préférence une pluralité de moyens d'encliquetage de plaque de recouvrement (48), pour l'assemblage avec la plaque de base (4) et/ou pour l'assemblage du dispositif de raccordement (1) en situation de montage.

7. Dispositif de raccordement (1) selon l'une des revendications 3 à 6, **caractérisé en ce que**
un moyen de contre-encliquetage (14) est formé sur une périphérie extérieure (20a) de l'élément d'accouplement (12), en particulier **en ce que** le moyen de contre-encliquetage (14) présente une première saillie d'encliquetage (15) avec une première zone d'encliquetage (15a) s'étendant au moins sur une partie de la périphérie, et **en ce que** la première saillie d'encliquetage (15) présente une première distance dans le sens longitudinal par rapport à une surface frontale (7a) entourant l'ouverture de raccordement (7), de préférence **en ce que** la première saillie d'encliquetage (15) présente une première hauteur radiale, de manière particulièrement préférée **en ce que** la première saillie d'encliquetage (15) présente une deuxième zone d'encliquetage (15b) opposée sur la circonférence à la première zone d'encliquetage (15a), de préférence **en ce que** le moyen de contre-encliquetage (14) présente une deuxième saillie d'encliquetage (16) avec une première zone d'encliquetage (16a) s'étendant au moins partiellement sur la circonférence, et **en ce que** la deuxième saillie d'encliquetage (16) présente une deuxième distance dans la direction longitudinale par rapport à une surface frontale (7a) entourant l'ouverture de raccordement (7), de préférence, la deuxième saillie d'encliquetage (16) présente une deuxième hauteur radiale, de manière particulièrement préférée, la deuxième saillie d'encliquetage (16) présente une deuxième zone d'encliquetage (16b) opposée sur la circonférence à la première zone d'encliquetage (16a).

8. Dispositif de raccordement (1) selon la revendication 7,
**caractérisé en ce que**
le moyen de contre-encliquetage (14) présente au moins deux saillies d'encliquetage (55a, 55b, 55c, 55d), en particulier au moins quatre saillies d'encliquetage (55a, 55b, 55c, 55d), de préférence que deux saillies d'encliquetage (55a, 55b, 55c, 55d) sont respectivement disposées en face l'une de l'autre de manière décalée par rapport à l'axe longitudinal (L) de l'élément de couplage (12).

9. Dispositif de raccordement (1) selon l'une quelconque des revendications 3 à 8,
**caractérisé en ce que**
l'élément d'accouplement (12) présente sur une périphérie extérieure (20a) au moins une arête d'encliquetage (53), en particulier au moins partiellement périphérique, de préférence présente en plus au moins une arête de fermeture (52) et/ou au moins une arête de guidage (54), de préférence encore que l'arête d'encliquetage (53), l'arête de fermeture (52) et l'arête de guidage (54) présentent des distances différentes par rapport à une face frontale (7a) de l'élément d'accouplement (12).

10. Dispositif de raccordement (1) selon l'une quelconque des revendications 3 à 9,
**caractérisé en ce que**
l'élément d'accouplement (12) présente au moins un moyen d'encliquetage à plaque (17) radialement flexible sur sa périphérie extérieure (20a), et **en ce que** le moyen d'encliquetage à plaque (17) présente un biseau d'introduction (19), et **en ce que** le biseau d'introduction (19) est incliné en direction d'un deuxième côté d'extrémité (18) opposé à l'accès de l'ouverture de raccordement (7), en particulier **en ce que** l'élément d'accouplement (12) présente deux moyens d'encliquetage à plaque (17) identiques, disposés en opposition sur la périphérie.

11. Dispositif de raccordement (1) selon l'une quelconque des revendications 3 à 10,
**caractérisé en ce que**
**que** l'élément d'accouplement (12) présente un corps de base d'accouplement (20) de type cylindrique, que l'ouverture de raccordement (7) est formée à l'intérieur du corps de base d'accouplement (20), que l'accès à l'ouverture de raccordement (7) est formé sur un premier côté d'extrémité (21) et que le canal de fluide (6) est formé sur un deuxième côté d'extrémité (18) avec un moyen de raccordement, en particulier un mandrin de raccordement (22).

12. Dispositif de raccordement (1) selon l'une des revendications 3 à 10, **caractérisé en ce que**
l'ouverture de raccordement (7) présente sur sa périphérie intérieure, sur le premier côté d'extrémité (21), une pluralité d'évidements de fuite (23a) s'étendant dans la direction longitudinale, et/ou **en ce que** l'ouverture de raccordement (7) présente au moins un épaulement entre deux diamètres intérieurs différents, et **en ce qu'**une pluralité d'évidements de fuite (23b) s'étendant dans la direction longitudinale est prévue sur la périphérie intérieure sur le plus petit diamètre.

13. Dispositif de raccordement (1) selon l'une des revendications 1 à 12, **caractérisé en ce que**
la pièce d'insertion (2) présente au moins un moyen d'encliquetage d'insertion (24), en particulier radialement élastique, le moyen d'encliquetage d'insertion (24) pouvant être encliqueté par complémentarité de forme avec la plaque de recouvrement (3), en particulier **en ce que** le moyen d'encliquetage d'insertion (24) est réalisé sous la forme d'au moins deux crochets d'encliquetage (24a), et **en ce que** les deux crochets d'encliquetage (24a) sont disposés sur la périphérie en étant opposés l'un à l'autre.

14. Dispositif de raccordement selon l'une quelconque des revendications 1 à 13, **caractérisé en ce que**
la pièce d'insertion (2) présente au moins un corps de base de pièce d'insertion (25) en forme de douille, **en ce que** le corps de base de pièce d'insertion (25) présente sur un premier côté d'extrémité (26) au moins deux bras de retenue (27) flexibles radialement, réalisés dans la direction longitudinale à partir du corps de base de pièce d'insertion (25), de sorte que l'interface de liaison (8) est réalisée sous forme de logement de fiche pour la liaison avec une fiche de raccordement (5) d'une conduite de fluide, en particulier **en ce qu'**au moins une saillie d'encliquetage (28) est formée sur chacun des bras de retenue (27), de préférence **en ce qu'**au moins un bras de retenue (27) présente au moins un élément d'appui (56) et/ou un évidement (57) sur le côté opposé à la saillie d'encliquetage (28), de préférence **en ce que** plus de deux bras de retenue (27) sont formés, et **en ce que** les saillies d'encliquetage (28) sur deux bras de retenue (27) juxtaposés présentent une distance différente dans la direction longitudinale par rapport au premier côté d'extrémité (26), en particulier de sorte qu'une position de pré-encliquetage et une position d'encliquetage complet peuvent être réalisées pour une fiche de raccordement (5) incorporable.

15. Dispositif de raccordement (1) selon l'une quelconque des revendications 1 à 14,
**caractérisé en ce que**
la pièce d'insertion (2) présente une première saillie de retenue (29) disposée sur la périphérie pour l'appui sur une surface frontale (7a) d'une ouverture de raccordement (7), et/ou une deuxième saillie de retenue (30) disposée sur la périphérie pour l'appui sur une surface de butée (31) disposée dans l'ouverture de raccordement (7).

16. Dispositif de raccordement (1) selon l'une quelconque des revendications 1 à 15,
**caractérisé en ce que**
la pièce d'insertion (2) est disposée sensiblement à fleur de la plaque de recouvrement (3).

17. Dispositif de raccordement (1) selon l'une quelconque des revendications 1 à 16,
**caractérisé en ce que**
la pièce d'insertion (2) présente au moins un joint d'étanchéité (32) sur une périphérie extérieure, en particulier **en ce que** le joint d'étanchéité (32) est disposé dans une rainure périphérique (33) dans la pièce d'insertion (2).

18. Dispositif de raccordement (1) selon l'une quelconque des revendications 1 à 17,
**caractérisé en ce que**
la pièce d'insertion (3) présente au moins une section de support (37) en forme de mandrin pour l'entrée dans une conduite, au moins une bague dentée (38) pour la fixation d'une conduite, ainsi qu'au moins un élément de desserrage (39).

19. Dispositif de raccordement (1) selon l'une quelconque des revendications 1 à 18,
**caractérisé en ce que**
la pièce d'insertion (2) présente sur une première circonférence intérieure (44) de l'interface de liaison (8) une pluralité de premiers évidements de fuite (45) disposés sur la circonférence, et/ou **en ce que** la pièce d'insertion (2) présente dans une deuxième circonférence intérieure (46) une pluralité de deuxièmes évidements de fuite (47) disposés sur la circonférence.

20. Dispositif de raccordement (1) selon l'une quelconque des revendications 1 à 19,
**caractérisé en ce que**
au moins quatre, de préférence au moins six ouvertures de raccordement (7) sont présentes.
